# EUROPEAN PATENT APPLICATION

(11) **EP 4 622 167 A1**
(43) Date of publication of application: **24.09.2025**
(21) Application number: 22966682.1
(22) Date of filing: 28.11.2022
(51) Int. Cl.: H04L 9/32, H04L 9/40, H04W 12/069

(54) **COMMUNICATION METHOD AND APPARATUS, AND VEHICLE**

(71) Applicant: Shenzhen Yinwang Intelligent Technologies Co., Ltd., Shenzhen, Guangdong 518129 (CN)
(72) Inventor: GUO, Zhipeng, Shenzhen, Guangdong 518129 (CN)
(74) Representative: MERH-IP Matias Erny Reichl Hoffmann Patentanwälte PartG mbB
(86) International application number: PCT/CN2022/134607
(87) International publication number: WO 2024/113077

(57) **Abstract**

Embodiments of this application provide a communication method and apparatus, and a transportation means. The method includes: sending a first request message to a first network device, where the first request message is used to request the first network device to issue a device certificate, the first request message includes a device identifier and an application scenario identifier, the device identifier identifies a transportation means and/or a component included in the transportation means, the application scenario identifier identifies a use scenario of a first device certificate, and the first device certificate is a certificate used when the transportation means performs a first business; and receiving a first response message sent by the first network device, where the first response message includes a second device certificate, the second device certificate is associated with the device identifier and the application scenario identifier, and the second device certificate is used to process the first business. According to the method, complexity of an overall certificate application and confirmation procedure can be reduced.

## Description

### TECHNICAL FIELD

Embodiments of this application relate to the communication field, and more specifically, to a communication method and apparatus, and a transportation means.

### BACKGROUND

As intelligent vehicles are widely used in daily life, businesses of internal and external communication of the vehicles gradually increase. In many scenarios, an identity of a vehicle end needs to be authenticated and authorized, to ensure authenticity of an identity of a communication body and authority of business permission.

Due to a long product life cycle of the vehicle, a device certificate stored in a component in the vehicle inevitably expires or is revoked, or even may be temporarily unallowed to be used due to business freezing. Consequently, the vehicle needs to have capabilities of applying for the certificate online and confirming a certificate status. However, in current solutions for applying for the certificate online by the vehicle, one part of the solutions do not support a process of confirming the certificate status, and the other part of the solutions support confirmation on the certificate status, but an overall certificate application and confirmation procedure is complex and has poor reliability, resulting in high retry costs.

### SUMMARY

Embodiments of this application provide a communication method and apparatus, and a transportation means, to reduce information exchange between the transportation means and a network device in a certificate application and confirmation procedure, and reduce complexity of the certificate application and confirmation procedure.

According to a first aspect, a communication method is provided. The method includes: sending a first request message to a first network device, where the first request message is used to request the first network device to issue a device certificate, the first request message includes a device identifier and an application scenario identifier, the device identifier identifies a transportation means and/or a component included in the transportation means, the application scenario identifier identifies a use scenario of a first device certificate, and the first device certificate is a certificate used when the transportation means performs a first business; and receiving a first response message sent by the first network device, where the first response message includes a second device certificate, the second device certificate is associated with the device identifier and the application scenario identifier, and the second device certificate is used to process the first business.

The first business may be a business that is currently being performed by the transportation means. The first business may include sensor data uploading, software upgrade, map downloading, or the like. There may be a correspondence between the first business and the application scenario identifier. For example, when the first business is software upgrade, the application scenario identifier may identify that the use scenario of the first device certificate is a software upgrade scenario.

Optionally, the second device certificate may be an ineffective device certificate. That the second device certificate is used to process the first business may be understood as that the transportation means may process the first business by using the second device certificate.

Optionally, the component included in the transportation means includes one or more of a vehicle gateway, a mobile data center, a cockpit data center, a telematics box, a sensor, an electronic control unit, and a vehicle dynamic control. In this application, the component and a device may have a same meaning. For example, the device certificate may be understood as a certificate used when any one of the foregoing components performs a business.

Optionally, the first network device may be a certificate service module.

In this embodiment of this application, the first request message sent by the transportation means to the first network device carries the device identifier and the application scenario identifier. Therefore, the first network device can determine the second device certificate based on the device identifier and the application scenario identifier. In this manner, in a process in which the first network device issues the second device certificate, information exchange with the transportation means does not need to be performed again, and the transportation means does not need to synchronously modify a specific parameter either. This can reduce complexity of a certificate application procedure, and improve certificate application efficiency.

With reference to the first aspect, in some implementations of the first aspect, the method further includes: processing the first business by using the first device certificate or the second device certificate.

In this embodiment of this application, after receiving the second device certificate, the transportation means can process the first business by using the first device certificate, or can process the first business by using the second device certificate. In this way, a manner in which the transportation means processes the business by using the device certificate is more flexible.

With reference to the first aspect, in some implementations of the first aspect, the method further includes: sending a second request message to the first network device, where the second request message is used to request the first network device to verify the second device certificate; and receiving a second response message sent by the first network device, where the second response message includes a verification result of the second device certificate associated with the device identifier and the application scenario identifier.

In this embodiment of this application, after applying for the second device certificate, the transportation means can quickly initiate a procedure of confirming the second device certificate. In this way, the transportation means can process the first business based on the verification result of the second device certificate.

With reference to the first aspect, in some implementations of the first aspect, the second request message includes the second device certificate, the device identifier, and the application scenario identifier.

With reference to the first aspect, in some implementations of the first aspect, when the verification result of the second device certificate is that verification succeeds, and the transportation means processes the first business by using the first device certificate, the processing the first business by using the first device certificate or the second device certificate includes: switching the first device certificate to the second device certificate, and processing the first business.

In this embodiment of this application, when the transportation means confirms that the certificate verification result is success, and the transportation means is using the first device certificate, the transportation means can switch the first device certificate to the second device certificate to process the first business. In this manner, the transportation means can process the business in a timely manner by using a confirmed new device certificate. This ensures security of processing the first business.

With reference to the first aspect, in some implementations of the first aspect, when the verification result of the second device certificate is that verification succeeds, and the transportation means processes the first business by using the second device certificate, the processing the first business by using the first device certificate or the second device certificate includes: continuing to process the first business by using the second device certificate.

In this embodiment of this application, when the transportation means confirms that the certificate verification result is success, and the transportation means already processes the business by using the second device certificate, the transportation means can continue to process the first business by using the second device certificate, without switching the device certificate. This improves efficiency of processing the first business.

With reference to the first aspect, in some implementations of the first aspect, when the verification result of the second device certificate is that verification fails, the processing the first business by using the first device certificate or the second device certificate includes: processing the first business by using the first device certificate.

In this embodiment of this application, when the transportation means confirms that the certificate verification result is a failure, the transportation means can process the first business by using the first device certificate. In this way, the transportation means can avoid processing the first business by using the unconfirmed second device certificate. This ensures security of processing the first business.

With reference to the first aspect, in some implementations of the first aspect, the method further includes: prompting a user that the second device certificate is unavailable.

Optionally, the transportation means may prompt, in a plurality of manners such as a display or a voice, the user that the second device certificate is unavailable.

Optionally, in a procedure of repeatedly performing certificate confirmation, if a previous certificate verification result of the second device certificate is success, that is, the transportation means already processes the first business by using the second device certificate, when the transportation means initiates the certificate confirmation procedure again, and the current verification result of the second device certificate is the failure, the transportation means may prompt the user that the first business cannot be performed.

With reference to the first aspect, in some implementations of the first aspect, before the sending a second request message to the first network device, the method further includes: determining whether a locally stored private key matches a public key of the second device certificate. The sending a second request message to the first network device includes: sending the second request message to the first network device when the locally stored private key matches the public key of the second device certificate.

Optionally, when it is determined that the locally stored private key does not match the public key of the second device certificate, the transportation means may prompt the user that the first business cannot be performed.

A principle of matching between the private key and the public key of the certificate is as follows: The public key of the certificate is actually an encrypted character string, and content of the public key can be seen by any person, but content of the private key can be known only by an owner (the transportation means). A ciphertext encrypted by using the public key can be decrypted by using a paired private key, but the private key cannot be decrypted by using the public key. In this application, if the public key of the certificate can be decrypted by using the private key locally stored in the transportation means, it indicates that the private key matches the public key.

In this embodiment of this application, before initiating the certificate confirmation procedure, the transportation means can locally check whether the private key matches the public key of the certificate. If the private key stored in the transportation means matches the public key of the second device certificate, the certificate confirmation procedure can be performed. If the private key stored in the transportation means does not match the public key of the second device certificate, it can be determined, without a connection to a network, that the second device certificate is unavailable, and a corresponding remedy can be performed in advance.

With reference to the first aspect, in some implementations of the first aspect, the method further includes: sending a third request message to a second network device, where the third request message is used to request the second network device to verify whether the transportation means has permission to perform the first business, and the third request message includes at least one of the following content: the second device certificate, the device identifier, and the application scenario identifier; and receiving a third response message sent by the second network device, where the third response message indicates a permission verification result of the transportation means.

Optionally, the second network device may be a business module. The business module may verify whether the transportation means has the permission to process the first business.

In this embodiment of this application, the transportation means can include the device identifier and/or the application scenario identifier in the third request message. In this way, the second network device can initiate, to the first network device, a procedure of verifying the second device certificate. In this manner, a process of signaling interaction between the transportation means and the first network device can be omitted. The transportation means needs only to process the first business based on the verification result of the business permission.

With reference to the first aspect, in some implementations of the first aspect, when the permission verification result is that the transportation means has the permission to perform the first business, and the transportation means processes the first business by using the first device certificate, the processing the first business by using the first device certificate or the second device certificate includes: switching the first device certificate to the second device certificate, and processing the first business.

In this embodiment of this application, when the transportation means confirms that the transportation means has the permission to perform the first business, and the transportation means is using the first device certificate, the transportation means can switch the first device certificate to the second device certificate to process the first business. In this manner, the transportation means can process the business in a timely manner by using a confirmed new device certificate. This not only ensures security of processing the first business, but also omits the process of signaling interaction between the transportation means and the first network device.

With reference to the first aspect, in some implementations of the first aspect, when the permission verification result is that the transportation means has the permission to perform the first business, and the transportation means processes the first business by using the second device certificate, the processing the first business by using the first device certificate or the second device certificate includes: continuing to process the first business by using the second device certificate.

In this embodiment of this application, when the transportation means confirms that the transportation means has the permission to perform the first business, and the transportation means already processes the business by using the second device certificate, the transportation means can continue to process the first business by using the second device certificate, without switching the device certificate. This not only improves efficiency of processing the first business, but also omits the process of signaling interaction between the transportation means and the first network device.

With reference to the first aspect, in some implementations of the first aspect, when the permission verification result is that the transportation means does not have the permission to perform the first business, the processing the first business by using the first device certificate or the second device certificate includes: processing the first business by using the first device certificate.

In this embodiment of this application, when the transportation means confirms that the transportation means does not have the permission to perform the first business, the transportation means can process the first business by using the first device certificate. In this way, the transportation means can avoid processing the first business by using the unconfirmed second device certificate. This ensures security of processing the first business.

According to a second aspect, a communication method is provided. The method includes: receiving a first request message sent by a transportation means, where the first request message is used to request a first network device to issue a device certificate, the first request message includes a device identifier and an application scenario identifier, the device identifier identifies the transportation means and/or a component included in the transportation means, the application scenario identifier identifies a use scenario of a first device certificate, and the first device certificate is a certificate used when the transportation means performs a first business; determining a second device certificate based on the device identifier and the application scenario identifier; and sending a first response message to the transportation means, where the first response message includes the second device certificate, and the second device certificate is used to process the first business.

In this embodiment of this application, the first network device can receive the device identifier and the application scenario identifier that are sent by the transportation means, and
determine the second device certificate based on the device identifier and the application scenario identifier. In this manner, in a process in which the first network device issues the second device certificate, information exchange with the transportation means does not need to be performed again, and the transportation means does not need to synchronously modify a specific parameter either. This can reduce complexity of a certificate application procedure, and improve certificate application efficiency.

With reference to the second aspect, in some implementations of the second aspect, the method further includes: receiving a second request message sent by a first device, where the second request message is used to request the first network device to verify the second device certificate, and the first device includes the transportation means or a second network device; determining a verification result of the second device certificate based on the device identifier and the application scenario identifier; and sending a second response message to the first device, where the second response message indicates the verification result of the second device certificate.

In this embodiment of this application, the first network device can verify the second device certificate based on the device identifier and the application scenario identifier of the transportation means, and return the verification result of the second device certificate to the transportation means. In this way, the transportation means can process the first business based on the verification result of the second device certificate.

With reference to the second aspect, in some implementations of the second aspect, the second request message includes the second device certificate, the device identifier, and the application scenario identifier.

With reference to the second aspect, in some implementations of the second aspect, the determining a verification result of the second device certificate based on the device identifier and the application scenario identifier includes: verifying validity of the device identifier and the application scenario identifier; and when the device identifier and the application scenario identifier are valid, determining that the verification result of the second device certificate is that verification succeeds.

With reference to the second aspect, in some implementations of the second aspect, the verifying validity of the device identifier and the application scenario identifier includes: verifying whether the device identifier is consistent with a device identifier preset in the first network device and whether the application scenario identifier is consistent with an application scenario identifier preset in the first network device.

For example, when the device identifier is consistent with the device identifier preset in the first network device, and the application scenario identifier is consistent with the application scenario identifier preset in the first network device, it may be confirmed that the device identifier and the application scenario identifier are valid, and the verification result of the second device certificate is success. When the device identifier is inconsistent with the device identifier preset in the first network device, or the application scenario identifier is inconsistent with the application scenario identifier preset in the first network device, it may be confirmed that the verification result of the second device certificate is a failure.

In this embodiment of this application, the first network device can verify validity of the device identifier and the application scenario identifier by verifying whether the device identifier is consistent with the device identifier preset in the first network device and whether the application scenario identifier is consistent with the application scenario identifier preset in the first network device, to determine the verification result of the second device certificate.

With reference to the second aspect, in some implementations of the second aspect, the second request message further includes a message signature. Before the determining a verification result of the second device certificate based on the device identifier and the application scenario identifier, the method further includes: verifying validity of the message signature by using the second device certificate.

In this embodiment of this application, the first network device can further verify validity of the signature by using the second device certificate. When the signature is valid, the first network device then verifies validity of the device identifier and the application scenario identifier.

With reference to the second aspect, in some implementations of the second aspect, the method further includes: keeping a status of the first device certificate in an effective state.

In this embodiment of this application, when the verification result of the second device certificate is that verification succeeds, the first network device may not switch the effective state of the first device certificate to a revoked state. In this way, both the effective first device certificate and second device certificate can exist in the transportation means. The first device certificate and the second device certificate can be mutually backed up. If one certificate is damaged, the business can be processed by using the other certificate.

With reference to the second aspect, in some implementations of the second aspect, the application scenario identifier includes at least one of the following content: a character string, a readable name, and a digital ID.

The character string may be understood as a string of characters including a digit, a letter, and an underscore, and may be a data type representing a text in a programming language. The readable name may be understood as a word that can be understood by a user. The digital ID may be understood as a digital identifier.

According to a third aspect, a communication method is provided. The method includes: receiving a third request message sent by a transportation means, where the third request message is used to request a second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; sending a second request message to a first network device, where the second request message is used to request the first network device to verify the second device certificate, and the second request message includes the second device certificate, the device identifier, and the application scenario identifier; receiving a second response message sent by the first network device, where the second response message includes a verification result of the second device certificate associated with the device identifier and the application scenario identifier; and sending a third response message to the transportation means based on the verification result of the second device certificate, where the third response message indicates a permission verification result of the transportation means.

Optionally, the second network device may be a business module. The business module may verify whether the transportation means has the permission to process the first business.

Optionally, the third request message may alternatively not carry the application scenario identifier, but carries only the device identifier. To be specific, the second network device is responsible for only authentication on the permission for the first business, and the second network device can determine an application scenario of the first business based on only the device identifier.

Optionally, the third request message may not carry the application scenario identifier and the device identifier. To be specific, the second network device is responsible for only authentication on the permission for the first business, the second network device already knows an identity of the transportation means, and the second network device can directly determine the application scenario of the first business.

It should be understood that the second device certificate is a device certificate issued by the first network device upon a request of the transportation means. In some possible implementations, the second device certificate may alternatively be any device certificate, for example, the first device certificate in the foregoing descriptions.

In this embodiment of this application, the second network device can obtain the device identifier and the application scenario identifier from the permission verification request message sent by the transportation means, and initiate, based on the device identifier and the application scenario identifier, a procedure of verifying the second device certificate to the first network device. In this manner, a process of signaling interaction between the transportation means and the first network device can be omitted. The transportation means needs only to process the first business based on the verification result of the business permission.

With reference to the third aspect, in some implementations of the third aspect, when the verification result of the second device certificate is success, the third response message indicates that the transportation means has the permission to perform the first business.

Optionally, when the verification result of the second device certificate is a failure, the third response message may indicate that the transportation means does not have the permission to perform the first business.

According to a fourth aspect, a communication method is provided. The method includes: sending a second request message to a first network device, where the second request message is used to request the first network device to verify a second device certificate; and receiving a second response message sent by the first network device, where the second response message includes a verification result of the second device certificate associated with a device identifier and an application scenario identifier, where the device identifier identifies a transportation means and/or a component included in the transportation means, the application scenario identifier identifies a use scenario of a first device certificate, and the first device certificate is a certificate used when the transportation means performs a first business.

With reference to the fourth aspect, in some implementations of the fourth aspect, the second request message includes the second device certificate, the device identifier, and the application scenario identifier.

With reference to the fourth aspect, in some implementations of the fourth aspect, before the sending a second request message to the first network device, the method further includes: processing the first business by using the first device certificate or the second device certificate.

With reference to the fourth aspect, in some implementations of the fourth aspect, when the verification result of the second device certificate is that verification succeeds, and the transportation means processes the first business by using the first device certificate, the processing the first business by using the first device certificate or the second device certificate includes: switching the first device certificate to the second device certificate, and processing the first business.

With reference to the fourth aspect, in some implementations of the fourth aspect, when the verification result of the second device certificate is that verification succeeds, and the transportation means processes the first business by using the second device certificate, the processing the first business by using the first device certificate or the second device certificate includes: continuing to process the first business by using the second device certificate.

With reference to the fourth aspect, in some implementations of the fourth aspect, when the verification result of the second device certificate is that verification fails, the processing the first business by using the first device certificate or the second device certificate includes: processing the first business by using the first device certificate.

With reference to the fourth aspect, in some implementations of the fourth aspect, the method further includes: prompting a user that the second device certificate is unavailable.

With reference to the fourth aspect, in some implementations of the fourth aspect, before the sending a second request message to the first network device, the method further includes: determining whether a locally stored private key matches a public key of the second device certificate. The sending a second request message to the first network device includes: sending the second request message to the first network device when the locally stored private key matches the public key of the second device certificate.

According to a fifth aspect, a communication method is provided. The method includes: sending a third request message to a second network device, where the third request message is used to request the second network device to verify whether a transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; and receiving a third response message sent by the second network device, where the third response message indicates a permission verification result of the transportation means.

With reference to the fifth aspect, in some implementations of the fifth aspect, before the sending a third request message to a second network device, the method further includes: processing the first business by using the first device certificate or the second device certificate.

With reference to the fifth aspect, in some implementations of the fifth aspect, when the permission verification result is that the transportation means has the permission to perform the first business, and the transportation means processes the first business by using the first device certificate, the processing the first business by using the first device certificate or the second device certificate includes: switching the first device certificate to the second device certificate, and processing the first business.

With reference to the fifth aspect, in some implementations of the fifth aspect, when the permission verification result is that the transportation means has the permission to perform the first business, and the transportation means processes the first business by using the second device certificate, the processing the first business by using the first device certificate or the second device certificate includes: continuing to process the first business by using the second device certificate.

With reference to the fifth aspect, in some implementations of the fifth aspect, when the permission verification result is that the transportation means does not have the permission to perform the first business, the processing the first business by using the first device certificate or the second device certificate includes: processing the first business by using the first device certificate.

According to a sixth aspect, a communication method is provided. The method includes: receiving a second request message sent by a first device, where the second request message is used to request a first network device to verify a second device certificate, and the first device includes a transportation means or a second network device; determining a verification result of the second device certificate based on a device identifier and an application scenario identifier; and sending a second response message to the first device, where the second response message indicates the verification result of the second device certificate.

It should be understood that, in the foregoing method, the first network device already stores the device identifier and the application scenario identifier in advance. After the first network device receives the second request message, the first network device can determine the verification result of the second device certificate based on the stored device identifier and application scenario identifier.

With reference to the sixth aspect, in some implementations of the sixth aspect, the second request message includes the second device certificate, the device identifier, and the application scenario identifier.

With reference to the sixth aspect, in some implementations of the sixth aspect, the determining a verification result of the second device certificate based on a device identifier and an application scenario identifier includes: verifying validity of the device identifier and the application scenario identifier; and when the device identifier and the application scenario identifier are valid, determining that the verification result of the second device certificate is that verification succeeds.

With reference to the sixth aspect, in some implementations of the sixth aspect, the verifying validity of the device identifier and the application scenario identifier includes: verifying whether the device identifier is consistent with a device identifier preset in the first network device and whether the application scenario identifier is consistent with an application scenario identifier preset in the first network device.

With reference to the sixth aspect, in some implementations of the sixth aspect, the method further includes: keeping a status of the first device certificate in an effective state.

With reference to the sixth aspect, in some implementations of the sixth aspect, the second request message further includes a message signature. Before the determining a verification result of the second device certificate based on a device identifier and an application scenario identifier, the method further includes: verifying validity of the message signature by using the second device certificate.

With reference to the sixth aspect, in some implementations of the sixth aspect, the application scenario identifier includes at least one of the following content: a character string, a readable name, and a digital ID.

According to a seventh aspect, a communication method is provided. The method includes: receiving a third request message sent by a transportation means, where the third request message is used to request a second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; sending a second request message to a first network device, where the second request message is used to request the first network device to verify the second device certificate, and the second request message includes the second device certificate, the device identifier, and the application scenario identifier; receiving a second response message sent by the first network device, where the second response message includes a verification result of the second device certificate associated with the device identifier and the application scenario identifier; and sending a third response message to the transportation means based on the verification result of the second device certificate, where the third response message indicates a permission verification result of the transportation means.

With reference to the seventh aspect, in some implementations of the seventh aspect, when the verification result of the second certificate is success, the third response message indicates that the transportation means has the permission to perform the first business.

According to an eighth aspect, a communication apparatus is provided. The apparatus includes a transceiver unit. The transceiver unit is configured to: send a first request message to a first network device, where the first request message is used to request the first network device to issue a device certificate, the first request message includes a device identifier and an application scenario identifier, the device identifier identifies a transportation means and/or a component included in the transportation means, the application scenario identifier identifies a use scenario of a first device certificate, and the first device certificate is a certificate used when the transportation means performs a first business; and receive a first response message sent by the first network device, where the first response message includes a second device certificate, the second device certificate is associated with the device identifier and the application scenario identifier, and the second device certificate is used to process the first business.

With reference to the eighth aspect, in some implementations of the eighth aspect, the apparatus further includes a processing unit. The processing unit is configured to process the first business by using the first device certificate or the second device certificate.

With reference to the eighth aspect, in some implementations of the eighth aspect, the transceiver unit is further configured to: send a second request message to the first network device, where the second request message is used to request the first network device to verify the second device certificate; and receive a second response message sent by the first network device, where the second response message includes a verification result of the second device certificate associated with the device identifier and the application scenario identifier.

With reference to the eighth aspect, in some implementations of the eighth aspect, the second request message includes the second device certificate, the device identifier, and the application scenario identifier.

With reference to the eighth aspect, in some implementations of the eighth aspect, when the verification result of the second device certificate is that verification succeeds, and the transportation means processes the first business by using the first device certificate, the processing unit is specifically configured to: switch the first device certificate to the second device certificate, and process the first business.

With reference to the eighth aspect, in some implementations of the eighth aspect, when the verification result of the second device certificate is that verification succeeds, and the transportation means processes the first business by using the second device certificate, the processing unit is specifically configured to continue to process the first business by using the second device certificate.

With reference to the eighth aspect, in some implementations of the eighth aspect, when the verification result of the second device certificate is that verification fails, the processing unit is specifically configured to process the first business by using the first device certificate.

With reference to the eighth aspect, in some implementations of the eighth aspect, when the verification result of the second device certificate is that verification fails, the processing unit is further configured to prompt a user that the second device certificate is unavailable.

With reference to the eighth aspect, in some implementations of the eighth aspect, the processing unit is further configured to determine whether a locally stored private key matches a public key of the second device certificate. The transceiver unit is further configured to send the second request message to the first network device when the locally stored private key matches the public key of the second device certificate.

With reference to the eighth aspect, in some implementations of the eighth aspect, the transceiver unit is further configured to: send a third request message to a second network device, where the third request message is used to request the second network device to verify whether the transportation means has permission to perform the first business, and the third request message includes at least one of the following content: the second device certificate, the device identifier, and the application scenario identifier; and receive a third response message sent by the second network device, where the third response message indicates a permission verification result of the transportation means.

With reference to the eighth aspect, in some implementations of the eighth aspect, when the permission verification result is that the transportation means has the permission to perform the first business, and the transportation means processes the first business by using the first device certificate, the processing unit is specifically configured to: switch the first device certificate to the second device certificate, and process the first business.

With reference to the eighth aspect, in some implementations of the eighth aspect, when the permission verification result is that the transportation means has the permission to perform the first business, and the transportation means processes the first business by using the second device certificate, the processing unit is specifically configured to continue to process the first business by using the second device certificate.

With reference to the eighth aspect, in some implementations of the eighth aspect, when the permission verification result is that the transportation means does not have the permission to perform the first business, the processing unit is specifically configured to process the first business by using the first device certificate.

According to a ninth aspect, a communication apparatus is provided. The apparatus includes a transceiver unit and a processing unit. The transceiver unit is configured to receive a first request message sent by a transportation means, where the first request message is used to request a first network device to issue a device certificate, the first request message includes a device identifier and an application scenario identifier, the device identifier identifies the transportation means and/or a component included in the transportation means, the application scenario identifier identifies a use scenario of a first device certificate, and the first device certificate is a certificate used when the transportation means performs a first business. The processing unit is configured to determine a second device certificate based on the device identifier and the application scenario identifier. The transceiver unit is further configured to send a first response message to the transportation means, where the first response message includes the second device certificate, and the second device certificate is used to process the first business.

With reference to the ninth aspect, in some implementations of the ninth aspect, the transceiver unit is further configured to receive a second request message sent by a first device, where the second request message is used to request the first network device to verify the second device certificate, and the first device includes the transportation means or a second network device. The processing unit is further configured to determine a verification result of the second device certificate based on the device identifier and the application scenario identifier. The transceiver unit is further configured to send a second response message to the first device, where the second response message indicates the verification result of the second device certificate.

With reference to the ninth aspect, in some implementations of the ninth aspect, the second request message includes the second device certificate, the device identifier, and the application scenario identifier.

With reference to the ninth aspect, in some implementations of the ninth aspect, the processing unit is specifically configured to: verify validity of the device identifier and the application scenario identifier; and when the device identifier and the application scenario identifier are valid, determine that the verification result of the second device certificate is that verification succeeds.

With reference to the ninth aspect, in some implementations of the ninth aspect, the processing unit is specifically configured to verify whether the device identifier is consistent with a device identifier preset in the first network device and whether the application scenario identifier is consistent with an application scenario identifier preset in the first network device.

With reference to the ninth aspect, in some implementations of the ninth aspect, the processing unit is further configured to keep a status of the first device certificate in an effective state.

With reference to the ninth aspect, in some implementations of the ninth aspect, the second request message further includes a message signature. The processing unit is further configured to verify validity of the message signature by using the second device certificate.

With reference to the ninth aspect, in some implementations of the ninth aspect, the application scenario identifier includes at least one of the following content: a character string, a readable name, and a digital ID.

According to a tenth aspect, a communication apparatus is provided. The apparatus includes a transceiver unit and a processing unit. The transceiver unit is configured to: receive a third request message sent by a transportation means, where the third request message is used to request a second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; send a second request message to a first network device, where the second request message is used to request the first network device to verify the second device certificate, and the second request message includes the second device certificate, the device identifier, and the application scenario identifier; and receive a second response message sent by the first network device, where the second response message includes a verification result of the second device certificate associated with the device identifier and the application scenario identifier. The processing unit is configured to send a third response message to the transportation means based on the verification result of the second device certificate, where the third response message indicates a permission verification result of the transportation means.

With reference to the tenth aspect, in some implementations of the tenth aspect, when the verification result of the second certificate is success, the third response message indicates that the transportation means has the permission to perform the first business.

According to an eleventh aspect, a communication apparatus is provided. The apparatus includes a transceiver unit. The transceiver unit is configured to: send a second request message to a first network device, where the second request message is used to request the first network device to verify a second device certificate; and receive a second response message sent by the first network device, where the second response message includes a verification result of the second device certificate associated with a device identifier and an application scenario identifier, where the device identifier identifies a transportation means and/or a component included in the transportation means, the application scenario identifier identifies a use scenario of a first device certificate, and the first device certificate is a certificate used when the transportation means performs a first business.

With reference to the eleventh aspect, in some implementations of the eleventh aspect, the second request message includes the second device certificate, the device identifier, and the application scenario identifier.

With reference to the eleventh aspect, in some implementations of the eleventh aspect, the apparatus further includes a processing unit. The processing unit is configured to process the first business by using the first device certificate or the second device certificate.

With reference to the eleventh aspect, in some implementations of the eleventh aspect, when the verification result of the second device certificate is that verification succeeds, and the transportation means processes the first business by using the first device certificate, the processing unit is specifically configured to: switch the first device certificate to the second device certificate, and process the first business.

With reference to the eleventh aspect, in some implementations of the eleventh aspect, when the verification result of the second device certificate is that verification succeeds, and the transportation means processes the first business by using the second device certificate, the processing unit is specifically configured to continue to process the first business by using the second device certificate.

With reference to the eleventh aspect, in some implementations of the eleventh aspect, when the verification result of the second device certificate is that verification fails, the processing unit is specifically configured to process the first business by using the first device certificate.

With reference to the eleventh aspect, in some implementations of the eleventh aspect, the processing unit is further configured to prompt a user that the second device certificate is unavailable.

With reference to the eleventh aspect, in some implementations of the eleventh aspect, the processing unit is further configured to determine whether a locally stored private key matches a public key of the second device certificate. The transceiver unit is specifically configured to send the second request message to the first network device when the locally stored private key matches the public key of the second device certificate.

According to a twelfth aspect, a communication apparatus is provided. The apparatus includes a transceiver unit. The transceiver unit is configured to: send a third request message to a second network device, where the third request message is used to request the second network device to verify whether a transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; and receive a third response message sent by the second network device, where the third response message indicates a permission verification result of the transportation means.

With reference to the twelfth aspect, in some implementations of the twelfth aspect, the apparatus further includes a processing unit. The processing unit is configured to process the first business by using the first device certificate or the second device certificate.

With reference to the twelfth aspect, in some implementations of the twelfth aspect, when the permission verification result is that the transportation means has the permission to perform the first business, and the transportation means processes the first business by using the first device certificate, the processing unit is specifically configured to: switch the first device certificate to the second device certificate, and process the first business.

With reference to the twelfth aspect, in some implementations of the twelfth aspect, when the permission verification result is that the transportation means has the permission to perform the first business, and the transportation means processes the first business by using the second device certificate, the processing unit is specifically configured to continue to process the first business by using the second device certificate.

With reference to the twelfth aspect, in some implementations of the twelfth aspect, when the permission verification result is that the transportation means does not have the permission to perform the first business, the processing unit is specifically configured to process the first business by using the first device certificate.

According to a thirteenth aspect, a communication apparatus is provided. The apparatus includes a transceiver unit and a processing unit. The transceiver unit is configured to receive a second request message sent by a first device, where the second request message is used to request a first network device to verify a second device certificate, and the first device includes a transportation means or a second network device. The processing unit is configured to determine a verification result of the second device certificate based on a device identifier and an application scenario identifier. The transceiver unit is further configured to send a second response message to the first device, where the second response message indicates the verification result of the second device certificate.

With reference to the thirteenth aspect, in some implementations of the thirteenth aspect, the second request message includes the second device certificate, the device identifier, and the application scenario identifier.

With reference to the thirteenth aspect, in some implementations of the thirteenth aspect, the processing unit is specifically configured to: verify validity of the device identifier and the application scenario identifier; and when the device identifier and the application scenario identifier are valid, determine that the verification result of the second device certificate is that verification succeeds.

With reference to the thirteenth aspect, in some implementations of the thirteenth aspect, the processing unit is specifically configured to verify whether the device identifier is consistent with a device identifier preset in the first network device and whether the application scenario identifier is consistent with an application scenario identifier preset in the first network device.

With reference to the thirteenth aspect, in some implementations of the thirteenth aspect, the processing unit is further configured to keep a status of the first device certificate in an effective state.

With reference to the thirteenth aspect, in some implementations of the thirteenth aspect, the second request message further includes a message signature. The processing unit is further configured to verify validity of the message signature by using the second device certificate.

With reference to the thirteenth aspect, in some implementations of the thirteenth aspect, the application scenario identifier includes at least one of the following content: a character string, a readable name, and a digital ID.

According to a fourteenth aspect, a communication apparatus is provided. The apparatus includes a transceiver unit and a processing unit. The transceiver unit is configured to: receive a third request message sent by a transportation means, where the third request message is used to request a second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; send a second request message to a first network device, where the second request message is used to request the first network device to verify the second device certificate, and the second request message includes the second device certificate, the device identifier, and the application scenario identifier; and receive a second response message sent by the first network device, where the second response message includes a verification result of the second device certificate associated with the device identifier and the application scenario identifier. The processing unit is configured to send a third response message to the transportation means based on the verification result of the second device certificate, where the third response message indicates a permission verification result of the transportation means.

With reference to the fourteenth aspect, in some implementations of the fourteenth aspect, when the verification result of the second certificate is success, the third response message indicates that the transportation means has the permission to perform the first business.

According to a fifteenth aspect, a communication apparatus is provided. The apparatus includes at least one processor and a memory. The at least one processor is coupled to the memory, and is configured to read and execute instructions in the memory, to enable the apparatus to implement the method according to any one of the implementations of the first aspect to the seventh aspect.

According to a sixteenth aspect, a computer-readable medium is provided. The computer-readable medium stores program code. When the computer program code is run on a computer, the computer is enabled to perform the method according to any one of the implementations of the first aspect to the seventh aspect.

According to a seventeenth aspect, a computer program product is provided. The computer product includes a computer program. When the computer program is run, a computer is enabled to perform the method according to any one of the implementations of the first aspect to the seventh aspect.

According to an eighteenth aspect, a chip is provided. The chip includes a circuit. The circuit is configured to perform the method according to any one of the first aspect to the seventh aspect.

According to a nineteenth aspect, a transportation means is provided, including at least one processor and a memory. The at least one processor is coupled to the memory, and is configured to read and execute instructions in the memory, to enable the apparatus to implement the method according to any one of the implementations of the first aspect, the fourth aspect, or the fifth aspect.

With reference to the nineteenth aspect, in some implementations of the nineteenth aspect, the transportation means is a vehicle.

According to a twentieth aspect, a server is provided, including at least one processor and a memory. The at least one processor is coupled to the memory, and is configured to read and execute instructions in the memory, to enable the apparatus to implement the method according to any one of the implementations of the second aspect, the third aspect, the sixth aspect, and the seventh aspect.

### BRIEF DESCRIPTION OF DRAWINGS

FIG. 1 is a functional diagram of a transportation means according to an embodiment of this application;
FIG. 2 shows a system architecture to which a communication method is applicable according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 shows a communication apparatus according to an embodiment of this application; and
FIG. 11 shows another communication apparatus according to an embodiment of this application.

### DESCRIPTION OF EMBODIMENTS

The following describes technical solutions in embodiments of this application with reference to accompanying drawings.

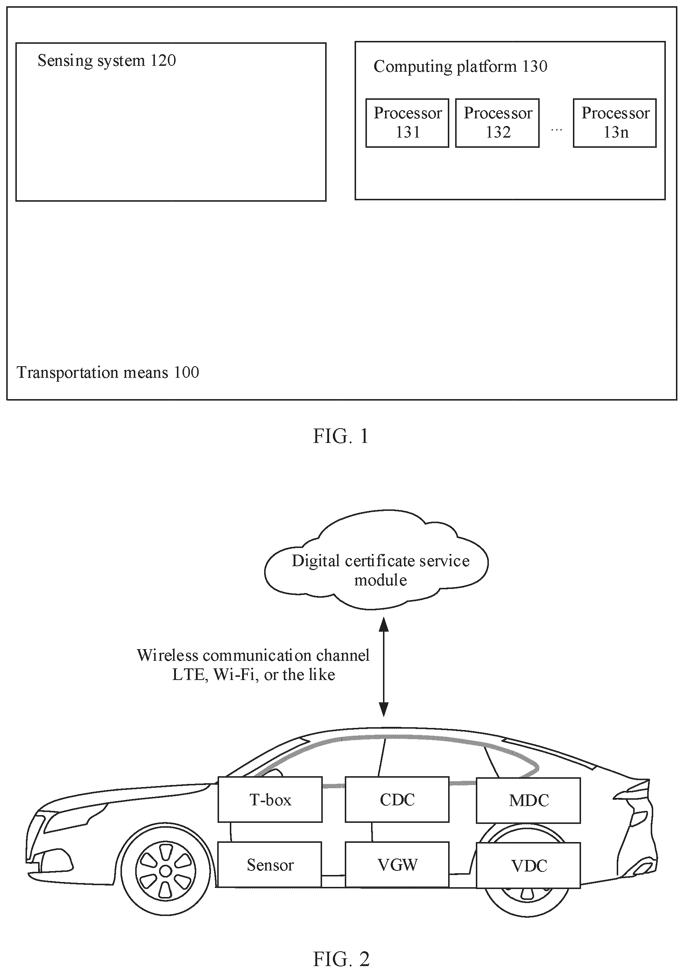

FIG. 1 is a functional diagram of a transportation means 100 according to an embodiment of this application. It should be understood that FIG. 1 and related descriptions are merely examples, and do not limit a transportation means in embodiments of this application.

The transportation means 100 may include a plurality of subsystems, for example, a sensing system 120 and a computing platform 130. Optionally, the transportation means 100 may include more or fewer subsystems, and each subsystem may include one or more components. In addition, all the subsystems and components of the transportation means 100 may be interconnected in a wired or wireless manner.

The sensing system 120 may include several types of sensors configured to sense information about an ambient environment of the transportation means 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

A part or all of functions of the transportation means 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of a part or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. A part or all of the processors 131 to 13n may invoke the instructions in the memory, to implement a corresponding function.

The computing platform 130 may control the functions of the transportation means 100 based on inputs received from the subsystems (for example, the sensing system 120). In some embodiments, the computing platform 130 may be configured to control many aspects of the transportation means 100 and the subsystems of the transportation means.

Optionally, the foregoing components are merely examples. During actual application, components in the foregoing modules may be added or deleted based on an actual requirement. FIG. 1 should not be understood as a limitation on embodiments of this application.

The transportation means 100 in this application may include a road conveyance, a water conveyance, an air conveyance, an industrial device, an agricultural device, an entertainment device, or the like. For example, the transportation means 100 may be a vehicle. The vehicle is a vehicle in a broad sense, and may be a conveyance (for example, a commercial vehicle, a passenger vehicle, a motorcycle, an airborne vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application. For another example, the transportation means 100 may be a conveyance like an airplane or a ship.

The following uses an example in which the transportation means is a vehicle to describe a technical problem that needs to be resolved in this application and technical solutions used in this application.

As intelligent vehicles are widely used in daily life, businesses of internal and external communication of the vehicles gradually increase. In many scenarios, an identity of a vehicle end needs to be authenticated and authorized, to ensure authenticity of an identity of a communication body and authority of business permission. For example, whether the vehicle has permission to upload a vehicle-end log and upload data to a cloud, perform vehicle-to-everything (vehicle to everything, V2X) communication, and securely transmit the data in the vehicle is authenticated.

Due to a long product life cycle of the vehicle, a device certificate stored in a component in the vehicle inevitably expires or is revoked, or even may be temporarily unallowed to be used due to business freezing. Consequently, the vehicle needs to have capabilities of applying for the certificate online and confirming a certificate status. However, in current solutions for applying for the certificate online by the vehicle, one part of the solutions do not support confirmation on the certificate status, and the vehicle can discover a certificate exception only in a business processing process. This increases difficulty of processing the business exception. The other part of the solutions support a process of confirming the certificate status, but information exchange needs to be performed a plurality of times in an overall certificate application and confirmation process, interruption of any step causes interruption of the procedure, and a certificate application or confirmation procedure needs to be restarted. The overall certificate application or confirmation procedure is complex, has poor reliability, and has high retry costs.

For example, in the certificate application process, the vehicle needs to perform information exchange with a certificate service module a plurality of times, and the vehicle needs to modify a specific parameter (for example, a server address) according to an instruction of the certificate service module. The overall certificate application procedure is complex, and has poor reliability.

Embodiments of this application provide a communication method and apparatus, and a transportation means, to reduce complexity of an overall certificate application and confirmation procedure.

Before the communication method provided in embodiments of this application is described, a system architecture to which the communication method is applicable is first described.

FIG. 2 shows a system architecture to which the communication method is applicable according to an embodiment of this application.

As shown in FIG. 2, the system architecture relates to an interaction system between a vehicle-end component/vehicle and an external digital certificate service module. The digital certificate service module may be deployed on a cloud platform or a server. The vehicle-end component may include a vehicle gateway (vehicle gateway, VGW), a mobile data center (mobile data centers, MDC), a cockpit data center (cockpit data center, CDC), a telematics box (telematics box, T-box), a sensor (Sensor), an electronic control unit (electronic control unit, ECU), a vehicle dynamic control (vehicle dynamic control, VDC), and the like.

Information exchange between the digital certificate service module and the vehicle may be implemented through a wireless communication channel.

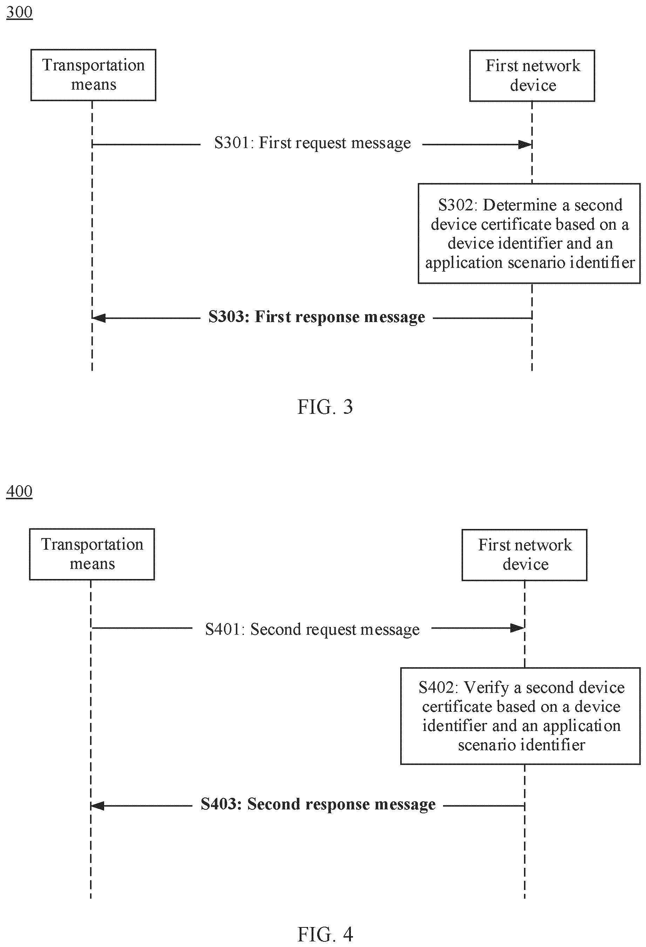

FIG. 3 is a schematic flowchart of a communication method according to an embodiment of this application. The method 300 may be applied to the system architecture in FIG. 2. The method 300 may include the following steps.

S301: A transportation means sends a first request message to a first network device.

The first request message is used to request the first network device to issue a device certificate. The first request message may include a device identifier and an application scenario identifier. The device identifier identifies the transportation means and/or a component included in the transportation means. The application scenario identifier identifies a use scenario of a first device certificate. The first device certificate is a certificate used when the transportation means performs a first business.

For example, the first business may be a business that is currently being performed by the transportation means. The first business may include sensor data uploading, software upgrade, map downloading, or the like. There may be a correspondence between the first business and the application scenario identifier. For example, when the first business is software upgrade, the application scenario identifier may identify that the use scenario of the first device certificate is a software upgrade scenario.

Optionally, the component included in the transportation means may include one or more of a vehicle gateway, a mobile data center, a cockpit data center, a telematics box, a sensor, an electronic control unit, and a vehicle dynamic control. In this application, the component and a device may have a same meaning. For example, the device certificate may be understood as a certificate used when any one of the foregoing components performs a business.

Optionally, the first network device may be a certificate service module.

A character string may be understood as a string of characters including a digit, a letter, and an underscore, and may be a data type representing a text in a programming language. A readable name may be understood as a word that can be understood by a user. A digital ID may be understood as a digital identifier.

S302: The first network device determines a second device certificate based on the device identifier and the application scenario identifier.

S303: The transportation means receives a first response message sent by the first network device.

The first response message includes the second device certificate. The second device certificate is associated with the device identifier and the application scenario identifier. The second device certificate is used to process the first business.

Optionally, the second device certificate may be an ineffective device certificate. That the second device certificate is used to process the first business may be understood as that the transportation means may process the first business by using the second device certificate.

**In** this embodiment of this application, the first request message sent by the transportation means to the first network device carries the device identifier and the application scenario identifier. Therefore, the first network device can determine the second device certificate based on the device identifier and the application scenario identifier. In this manner, in a process in which the first network device issues the second device certificate, information exchange with the transportation means does not need to be performed again, and the transportation means does not need to synchronously modify a specific parameter either. This can reduce complexity of a certificate application procedure, and improve certificate application efficiency.

**In** an embodiment, after step S303, the method further includes: The transportation means processes the first business by using the first device certificate or the second device certificate.

In this embodiment of this application, after receiving the second device certificate, the transportation means can process the first business by using the first device certificate, or can process the first business by using the second device certificate. In this way, a manner in which the transportation means processes the business by using the device certificate is more flexible.

After applying for the second device certificate, the transportation means can directly initiate a certificate confirmation procedure to the first network device.

**In** an embodiment, after step S303, the method further includes: The transportation means sends a second request message to the first network device, where the second request message is used to request the first network device to verify the second device certificate; and the transportation means receives a second response message sent by the first network device, where the second response message includes a verification result of the second device certificate associated with the device identifier and the application scenario identifier.

Optionally, the second request message may include the second device certificate, the device identifier, and the application scenario identifier.

In this embodiment of this application, after applying for the second device certificate, the transportation means can quickly initiate a procedure of confirming the second device certificate. In this way, the transportation means can process the first business based on the verification result of the second device certificate.

The first network device can determine the verification result of the second device certificate based on the device identifier and the application scenario identifier, and therefore include the verification result of the second device certificate in the second response message.

In an embodiment, the first network device may verify validity of the device identifier and the application scenario identifier, and when the device identifier and the application scenario identifier are valid, determine that the verification result of the second device certificate is that verification succeeds.

Optionally, that the first network device verifies validity of the device identifier and the application scenario identifier includes: The first network device verifies whether the device identifier is consistent with a device identifier preset in the first network device and whether the application scenario identifier is consistent with an application scenario identifier preset in the first network device.

In this embodiment of this application, the first network device can verify validity of the device identifier and the application scenario identifier by verifying whether the device identifier is consistent with the device identifier preset in the first network device and whether the application scenario identifier is consistent with the application scenario identifier preset in the first network device, to determine the verification result of the second device certificate.

In an embodiment, the second request message may further include a message signature. Before the first network device determines the verification result of the second device certificate based on the device identifier and the application scenario identifier, the method further includes: The first network device verifies validity of the message signature by using the second device certificate.

In this embodiment of this application, the first network device can further verify validity of the signature by using the second device certificate. When the signature is valid, the first network device then verifies validity of the device identifier and the application scenario identifier.

In an embodiment, after confirming that verification on the second device certificate succeeds, the first network device keeps a status of the first device certificate in an effective state.

In this embodiment of this application, when the verification result of the second device certificate is that verification succeeds, the first network device may not switch the effective state of the first device certificate to a revoked state. In this way, both the effective first device certificate and second device certificate can exist in the transportation means. The first device certificate and the second device certificate can be mutually backed up. If one certificate is damaged, the business can be processed by using the other certificate.

In an embodiment, before the transportation means sends the second request message to the first network device, the method further includes: The transportation means determines whether a locally stored private key matches a public key of the second device certificate, and sends the second request message to the first network device when the locally stored private key matches the public key of the second device certificate.

Optionally, when it is determined that the locally stored private key does not match the public key of the second device certificate, the transportation means may prompt the user that the first business cannot be performed.

A principle of matching between the private key and the public key of the certificate is as follows: The public key of the certificate is actually an encrypted character string, and content of the public key can be seen by any person, but content of the private key can be known only by an owner (the transportation means). A ciphertext encrypted by using the public key can be decrypted by using a paired private key, but the private key cannot be decrypted by using the public key. In this application, if the public key of the certificate can be decrypted by using the private key locally stored in the transportation means, it indicates that the private key matches the public key.

In this embodiment of this application, before initiating the certificate confirmation procedure, the transportation means can locally check whether the private key matches the public key of the certificate. If the private key stored in the transportation means matches the public key of the second device certificate, the certificate confirmation procedure can be performed. If the private key stored in the transportation means does not match the public key of the second device certificate, it can be determined, without a connection to a network, that the second device certificate is unavailable, and a corresponding remedy can be performed in advance.

After receiving the verification result of the second certificate, the transportation means can perform different processing with reference to current certificate use of the transportation means.

In an embodiment, when the verification result of the second device certificate is that verification succeeds, and the transportation means processes the first business by using the first device certificate, that the transportation means processes the first business by using the first device certificate or the second device certificate includes: The transportation means switches the first device certificate to the second device certificate, and processes the first business.

In this embodiment of this application, when the transportation means confirms that the certificate verification result is success, and the transportation means is using the first device certificate, the transportation means can switch the first device certificate to the second device certificate to process the first business. In this manner, the transportation means can process the business in a timely manner by using a confirmed new device certificate. This ensures security of processing the first business.

In an embodiment, when the verification result of the second device certificate is that verification succeeds, and the transportation means processes the first business by using the second device certificate, that the transportation means processes the first business by using the first device certificate or the second device certificate includes: The transportation means continues to process the first business by using the second device certificate.

In this embodiment of this application, when the transportation means confirms that the certificate verification result is success, and the transportation means already processes the business by using the second device certificate, the transportation means can continue to process the first business by using the second device certificate, without switching the device certificate. This improves efficiency of processing the first business.

In an embodiment, when the verification result of the second device certificate is that verification fails, that the transportation means processes the first business by using the first device certificate or the second device certificate includes: The transportation means processes the first business by using the first device certificate.

Optionally, when the transportation means confirms that the certificate verification result is a failure, the transportation means may further prompt the user that the second device certificate is unavailable.

Optionally, the transportation means may prompt, in a plurality of manners such as a display or a voice, the user that the second device certificate is unavailable.

Optionally, in a procedure of repeatedly performing certificate confirmation, if a previous certificate verification result of the second device certificate is success, that is, the transportation means already processes the first business by using the second device certificate, when the transportation means initiates the certificate confirmation procedure again, and the current verification result of the second device certificate is the failure, the transportation means may prompt the user that the first business cannot be performed.

In this embodiment of this application, when the transportation means confirms that the certificate verification result is the failure, the transportation means can process the first business by using the first device certificate. In this way, the transportation means can avoid processing the first business by using the unconfirmed second device certificate. This ensures security of processing the first business.

The transportation means may further include at least one of the second device certificate, the device identifier, and the application scenario identifier in a permission verification request message. In this way, the second network device may initiate the certificate confirmation procedure.

In an embodiment, after step S303, the method further includes: The transportation means sends a third request message to a second network device, where the third request message is used to request the second network device to verify whether the transportation means has permission to perform the first business, and the third request message includes at least one of the following content: the second device certificate, the device identifier, and the application scenario identifier; and transportation means receives a third response message sent by the second network device, where the third response message indicates a permission verification result of the transportation means.

Optionally, the second network device may be a business module. The business module may verify whether a vehicle has the permission to process the first business.

In this embodiment of this application, the transportation means can include the device identifier and/or the application scenario identifier in the third request message. In this way, the second network device can initiate, to the first network device, a procedure of verifying the second device certificate. In this manner, a process of signaling interaction between the transportation means and the first network device can be omitted. The transportation means needs only to process the first business based on the verification result of the business permission.

After receiving the permission verification result, the transportation means can perform different processing with reference to current certificate use of the transportation means.

In an embodiment, when the permission verification result is that the transportation means has the permission to perform the first business, and the transportation means processes the first business by using the first device certificate, that the transportation means processes the first business by using the first device certificate or the second device certificate includes: The transportation means switches the first device certificate to the second device certificate, and processes the first business.

In this embodiment of this application, when the transportation means confirms that the transportation means has the permission to perform the first business, and the transportation means is using the first device certificate, the transportation means can switch the first device certificate to the second device certificate to process the first business. In this manner, the transportation means can process the business in a timely manner by using a confirmed new device certificate. This not only ensures security of processing the first business, but also omits the process of signaling interaction between the transportation means and the first network device.

In an embodiment, when the permission verification result is that the transportation means has the permission to perform the first business, and the transportation means processes the first business by using the second device certificate, that the transportation means processes the first business by using the first device certificate or the second device certificate includes: The transportation means continues to process the first business by using the second device certificate.

In this embodiment of this application, when the transportation means confirms that the transportation means has the permission to perform the first business, and the transportation means already processes the business by using the second device certificate, the transportation means can continue to process the first business by using the second device certificate, without switching the device certificate. This not only improves efficiency of processing the first business, but also omits the process of signaling interaction between the transportation means and the first network device.

In an embodiment, when the permission verification result is that the transportation means does not have the permission to perform the first business, that the transportation means processes the first business by using the first device certificate or the second device certificate includes: The transportation means processes the first business by using the first device certificate.

In this embodiment of this application, when the transportation means confirms that the transportation means does not have the permission to perform the first business, the transportation means can process the first business by using the first device certificate. In this way, the transportation means can avoid processing the first business by using the unconfirmed second device certificate. This ensures security of processing the first business.

FIG. 4 is a schematic flowchart of a communication method according to an embodiment of this application. The method 400 may be applied to the system architecture in FIG. 2. The method 400 may also be applied to the certificate confirmation procedure in the method 300. The method 400 may include the following steps.

S401: A transportation means sends a second request message to a first network device.

The second request message is used to request the first network device to verify a second device certificate.

Optionally, the second request message may include a second device certificate, a device identifier, and an application scenario identifier.

Optionally, the first network device may be a certificate service module.

In an embodiment, before step S401, the method further includes: The transportation means determines whether a locally stored private key matches a public key of the second device certificate, and sends the second request message to the first network device when the locally stored private key matches the public key of the second device certificate.

Optionally, when it is determined that the locally stored private key does not match the public key of the second device certificate, the transportation means may prompt a user that the first business cannot be performed.

S402: The first network device verifies the second device certificate based on the device identifier and the application scenario identifier.

In an embodiment, the first network device may verify validity of the device identifier and the application scenario identifier, and when the device identifier and the application scenario identifier are valid, determine that a verification result of the second device certificate is that verification succeeds.

Optionally, that the first network device verifies validity of the device identifier and the application scenario identifier includes: The first network device verifies whether the device identifier is consistent with a device identifier preset in the first network device and whether the application scenario identifier is consistent with an application scenario identifier preset in the first network device.

In an embodiment, the second request message may further include a message signature. Before step S402 and the first network device is based on the device identifier and the application scenario identifier, the method further includes: The first network device verifies validity of the message signature by using the second device certificate. In this way, when the message signature is valid, the first network device then verifies validity of the device identifier and the application scenario identifier.

S403: The transportation means receives a second response message sent by the first network device.

The second response message includes the verification result of the second device certificate associated with the device identifier and the application scenario identifier.

In this embodiment of this application, the transportation means can independently initiate a device certificate confirmation procedure, that is, the device certificate confirmation procedure does not need to be performed after a device certificate application procedure. In this way, application scenarios of the certificate confirmation procedure can be more diversified, and requirements of different users can be met.

In an embodiment, before step S401, the method further includes: The transportation means processes the first business by using a first device certificate or the second device certificate. The first device certificate may be a certificate that is used by the transportation means to process the first business before the second device certificate is applied for.

In an embodiment, after step S403, the method further includes: When the verification result of the second device certificate is that verification succeeds, and the transportation means processes the first business by using the first device certificate, that the transportation means processes the first business by using a first device certificate or the second device certificate includes: The transportation means switches the first device certificate to the second device certificate, and processes the first business.

In this embodiment of this application, when the transportation means confirms that the certificate verification result is success, and the transportation means is using the first device certificate, the transportation means can switch the first device certificate to the second device certificate to process the first business. In this manner, the transportation means can process the business in a timely manner by using a confirmed new device certificate. This ensures security of processing the first business.

In an embodiment, after step S403, the method further includes: When the verification result of the second device certificate is that verification succeeds, and the transportation means processes the first business by using the second device certificate, that the transportation means processes the first business by using a first device certificate or the second device certificate includes: The transportation means continues to process the first business by using the second device certificate.

In this embodiment of this application, when the transportation means confirms that the certificate verification result is success, and the transportation means already processes the business by using the second device certificate, the transportation means can continue to process the first business by using the second device certificate, without switching the device certificate. This improves efficiency of processing the first business.

In an embodiment, after step S403, the method further includes: When the verification result of the second device certificate is that verification fails, that the transportation means processes the first business by using a first device certificate or the second device certificate includes: The transportation means processes the first business by using the first device certificate.

Optionally, when the transportation means confirms that the certificate verification result is a failure, the transportation means may further prompt the user that the second device certificate is unavailable.

Optionally, the transportation means may prompt, in a plurality of manners such as a display or a voice, the user that the second device certificate is unavailable.

Optionally, in a procedure of repeatedly performing certificate confirmation, if a previous certificate verification result of the second device certificate is success, that is, the transportation means already processes the first business by using the second device certificate, when the transportation means initiates the certificate confirmation procedure again, and the current verification result of the second device certificate is the failure, the transportation means may prompt the user that the first business cannot be performed.

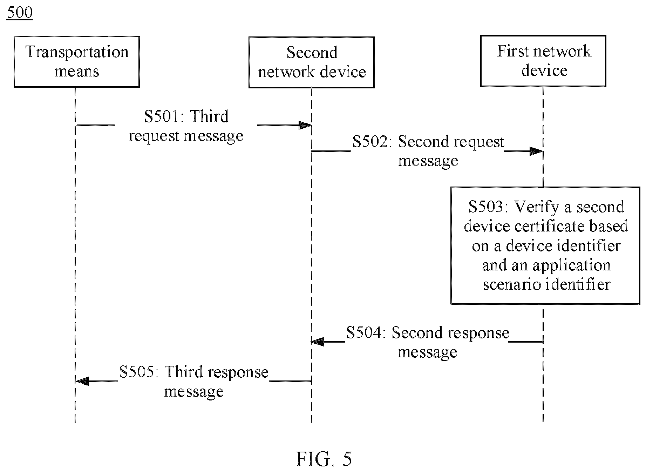

FIG. 5 is a schematic flowchart of a communication method according to an embodiment of this application. The method 500 may be applied to the system architecture in FIG. 2. The method 500 may also be applied to the business permission verification procedure in the method 300. The method 500 may include the following steps.

S501: A transportation means sends a third request message to a second network device.

The third request message is used to request the second network device to verify whether the transportation means has permission to perform a first business. The third request message includes at least one of the following content: a second device certificate, a device identifier, and an application scenario identifier. The second device certificate is used to process the first business. The device identifier identifies the transportation means and/or a component included in the transportation means. The application scenario identifier identifies a use scenario of a first device certificate. The first device certificate is a certificate used when the transportation means performs the first business.

Optionally, the third request message may alternatively not carry the application scenario identifier, but carries only the device identifier. To be specific, the second network device is responsible for only authentication on the permission for the first business, and the second network device can determine an application scenario of the first business based on only the device identifier.

Optionally, the third request message may not carry the application scenario identifier and the device identifier. To be specific, the second network device is responsible for only authentication on the permission for the first business, the second network device already knows an identity of the transportation means, and the second network device can directly determine the application scenario of the first business.

S502: The second network device sends a second request message to a first network device.

The second request message is used by the first network device to verify the second device certificate.

Optionally, the second request message may include the second device certificate, the device identifier, and the application scenario identifier.

S503: The first network device verifies the second device certificate based on the device identifier and the application scenario identifier.

In an embodiment, the first network device may verify validity of the device identifier and the application scenario identifier, and when the device identifier and the application scenario identifier are valid, determine that a verification result of the second device certificate is that verification succeeds.

Optionally, that the first network device verifies validity of the device identifier and the application scenario identifier includes: The first network device verifies whether the device identifier is consistent with a device identifier preset in the first network device and whether the application scenario identifier is consistent with an application scenario identifier preset in the first network device.

In an embodiment, the second request message may further include a message signature. Before step S503 and the first network device is based on the device identifier and the application scenario identifier, the method further includes: The first network device verifies validity of the message signature by using the second device certificate. In this way, when the message signature is valid, the first network device then verifies validity of the device identifier and the application scenario identifier.

S504: The second network device receives a second response message sent by the first network device.

The second response message includes the verification result of the second device certificate associated with the device identifier and the application scenario identifier.

S505: The transportation means receives a third response message sent by the second network device.

The third response message indicates a permission verification result of the transportation means.

Optionally, when the permission verification result is that verification succeeds, the third response message may indicate that the transportation means has the permission to perform the first business. When the permission verification result is a failure, the third response message may indicate that the transportation means does not have the permission to perform the first business.

In this embodiment of this application, the second network device can obtain the device identifier and the application scenario identifier from the permission verification request message sent by the transportation means, and initiate, based on the device identifier and the application scenario identifier, a procedure of verifying the second device certificate to the first network device. In this manner, a process of signaling interaction between the transportation means and the first network device can be omitted. The transportation means needs only to process the first business based on the verification result of the business permission.

After receiving the third response message, the transportation means can perform different processing with reference to current device certificate use of the transportation means based on a permission verification result.

In an embodiment, when the permission verification result is that the transportation means has the permission to perform the first business, and the transportation means processes the first business by using the first device certificate, that the transportation means processes the first business by using the first device certificate or the second device certificate includes: The transportation means switches the first device certificate to the second device certificate, and processes the first business.

In this embodiment of this application, when the transportation means confirms that the transportation means has the permission to perform the first business, and the transportation means is using the first device certificate, the transportation means can switch the first device certificate to the second device certificate to process the first business. In this manner, the transportation means can process the business in a timely manner by using a confirmed new device certificate. This not only ensures security of processing the first business, but also omits the process of signaling interaction between the transportation means and the first network device.

In an embodiment, when the permission verification result is that the transportation means has the permission to perform the first business, and the transportation means processes the first business by using the second device certificate, that the transportation means processes the first business by using the first device certificate or the second device certificate includes: The transportation means continues to process the first business by using the second device certificate.

In this embodiment of this application, when the transportation means confirms that the transportation means has the permission to perform the first business, and the transportation means already processes the business by using the second device certificate, the transportation means can continue to process the first business by using the second device certificate, without switching the device certificate. This not only improves efficiency of processing the first business, but also omits the process of signaling interaction between the transportation means and the first network device.

In an embodiment, when the permission verification result is that the transportation means does not have the permission to perform the first business, that the transportation means processes the first business by using the first device certificate or the second device certificate includes: The transportation means processes the first business by using the first device certificate.

In this embodiment of this application, when the transportation means confirms that the transportation means does not have the permission to perform the first business, the transportation means can process the first business by using the first device certificate. In this way, the transportation means can avoid processing the first business by using the unconfirmed second device certificate. This ensures security of processing the first business.

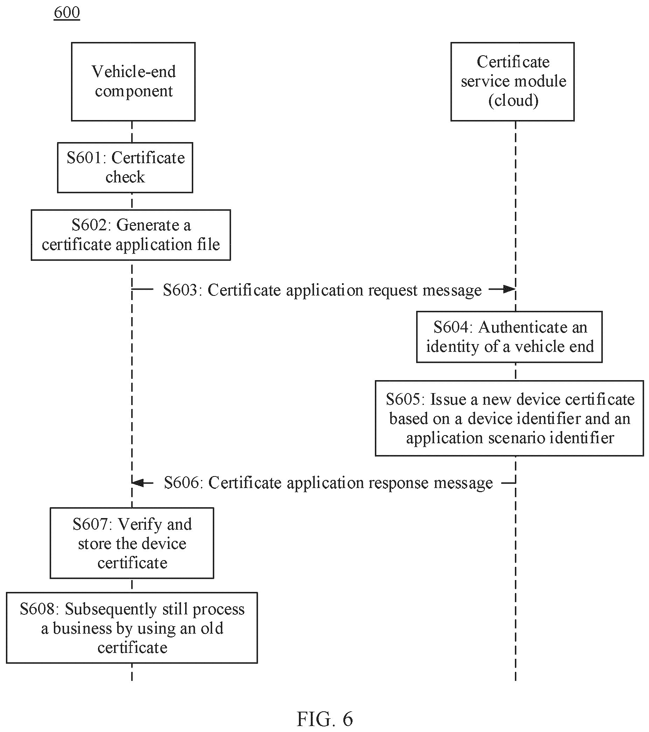

FIG. 6 is a schematic flowchart of another communication method according to an embodiment of this application. The method 600 may be detailed descriptions of steps S301 to S303 in the method 300. The method 600 may include the following steps.

S601: A vehicle-end component performs certificate check.

Specifically, the vehicle-end component may check a validity period of a local device certificate. When the device certificate is about to expire and/or meets another required condition, the vehicle-end component may initiate a certificate application process, and perform subsequent steps. The another required condition may include a vehicle running status, user confirmation, and/or the like. For example, when a vehicle is parked, the vehicle prompts a user that a certificate needs to be applied for. After the user performs confirmation on a vehicle-mounted display, the vehicle-end component may initiate the certificate application procedure.

Optionally, the vehicle-end component may periodically perform certificate check. For example, the vehicle-end component may perform certificate check each time the vehicle is started or at specific time every day.

It should be understood that the vehicle-end component may be located in the transportation means in the method 300. The vehicle-end component may include one or more of a vehicle gateway, a mobile data center, a cockpit data center, a telematics box, a sensor, an electronic control unit, and a vehicle dynamic control.

S602: The vehicle-end component generates a certificate application file.

For example, the vehicle-end component may randomly generate a public-private key pair, and generate the certificate application file based on a public key. In addition, the vehicle-end component can securely store a private key.

S603: The vehicle-end component sends a certificate application request message to a certificate service module.

Specifically, the vehicle-end component may send the certificate application request message to the certificate service module. The certificate application request message may include a device identifier and an application scenario identifier, or the device identifier, the application scenario identifier, and at least one of the following content: a device certificate, a message signature, the certificate application file, and another additional parameter. The certificate application message may be the first request message in the method 300.

The device identifier identifies the vehicle-end component. The application scenario identifier may be allocated based on a business, and identifies a use scenario of the certificate. A specific form of the scenario identifier may be a fixed character string, a readable name, a digital ID, or the like. The device certificate may be a device certificate used for the current business of a vehicle end, and the device certificate may be the first device certificate in the method 300. The message signature may be a digital signature performed on the device identifier, the application scenario identifier, the certificate application file, and the another additional parameter by using the private key of the device certificate. The another additional parameter is used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), and the like.

S604: The certificate service module authenticates an identity of the vehicle end.

Specifically, after receiving the certificate application request message, the certificate service module may authenticate, based on the certificate application request message, the identity of the vehicle end in at least one of the following manners.
(1) The certificate service module uses a certificate authority (Certificate Authority, CA) certificate to verify authority of the device certificate, check whether the validity period of the device certificate expires, and check whether the device certificate is in a valid state.
(2) The certificate service module uses the device certificate to verify whether the signature in the certificate application request message is valid.
(3) The certificate service module performs identity authorization, to be specific, checks whether the device identifier and the application scenario identifier are valid and whether certificate application is allowed.

The certificate service module may be the first network device in the method 300.

S605: The certificate service module issues a new device certificate based on the device identifier and the application scenario identifier.

For example, the certificate service module may select corresponding information such as a certificate issuance address, an interface, and an identifier ID based on the device identifier and the application scenario identifier in the certificate application request message, and issue the new device certificate. The new device certificate may be the second device certificate in the method 300.

Optionally, the certificate service module may configure a correspondence between the application scenario identifier and certificate issuance service information in a form of a configuration file, a database, or the like.

S606: The certificate service module sends a certificate application response message to the vehicle-end component.

Optionally, the certificate application response message may include the new device certificate and at least one of the following content: a cloud certificate, a message signature, an application scenario identifier, and another additional parameter. The certificate application response message may be the second response message in the method 300.

The cloud certificate may be used to authenticate an identity of the certificate service module. The message signature may be a digital signature performed on all of the application scenario identifier, the new device certificate, and the another additional parameter by using a private key of the cloud certificate. The application scenario identifier may be consistent with the application scenario identifier in the certificate application request message. The another additional parameter is used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), and the like.

S607: The vehicle-end component verifies and stores the device certificate.

Specifically, after receiving the certificate application response message, the vehicle-end component may verify the cloud certificate and the message signature in the message. After verification on the cloud certificate and the message signature succeeds, the vehicle-end component verifies and securely stores the device certificate.

Optionally, a process of verifying the device certificate may include signature field verification, validity period verification, and the like.

S608: The vehicle-end component subsequently still processes the business by using the old device certificate.

Specifically, the vehicle-end component may still process the business by using the old device certificate, and switch the old device certificate to the new device certificate after an appropriate condition is met. The business may be the first business in the method 300.

Optionally, the appropriate condition may include at least one of the following content: completion of certificate confirmation by the vehicle-end, the vehicle being in a parked state, user confirmation, and the like.

It should be understood that, in this embodiment of this application, the device certificate may include a plurality of states. To be specific, in addition to that the certificate is in an expired or revoked state, the device certificate further includes a to-be-effective state, an effective state, a frozen state, and the like. The vehicle-end component is allowed to process the business only when the certificate is in the effective state. In the remaining states, the vehicle-end component is forbidden to process the business.

It should be further understood that the certificate is in the to-be-effective state when being just issued, and the certificate service module switches the certificate to the effective state after successfully confirming the issued certificate. After a validity period of the certificate expires, the certificate service module switches the effective certificate to the expired state. When some security events occur, the certificate service module may actively switch the certificate from the effective state to the revoked state. In some business scenarios, for example, scenarios such as user subscription expiration and business suspension, the certificate service module may switch the certificate from the effective state to the frozen state, and after the business is restored, restore the certificate from the frozen state to the effective state.

In this embodiment of this application, the certificate application request message sent by the vehicle-end component to the certificate service module includes the device identifier and the application scenario identifier. The certificate service module can select, based on the device identifier and the application scenario identifier, a corresponding CA to issue the new certificate. In the overall process, the vehicle-end component does not need to perform information exchange with the certificate service module again. This can improve efficiency of applying for the device certificate, and reduce complexity of the overall certificate application procedure. In addition, after application for the new certificate is completed, the vehicle-end component can still process the business by using the old certificate. In this way, before a confirmation procedure of the new certificate is completed, a scenario in which no certificate is available does not exist. This can improve reliability of the business.

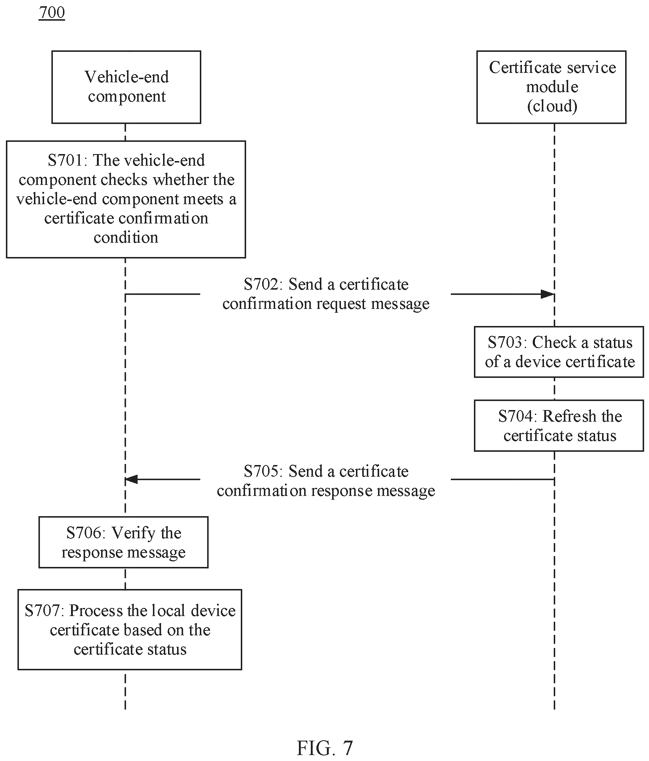

FIG. 7 is a schematic flowchart of another communication method according to an embodiment of this application. The method 700 is detailed descriptions of the certificate confirmation procedure in the method 300 and steps S401 to S403 in the method 400. The method 700 may be performed after the method 600. The method 700 may include the following steps.

S701: A vehicle-end component checks whether the vehicle-end component meets a certificate confirmation condition.

Specifically, the vehicle-end component may check whether the vehicle-end component currently meets the certificate confirmation condition. When the condition is met, the vehicle-end component initiates a certificate confirmation procedure, and performs subsequent steps. The certificate confirmation condition may include a vehicle running status, user confirmation, and/or the like. For example, when a vehicle is parked, the vehicle-end component may initiate the certificate confirmation procedure.

Optionally, the vehicle-end component may periodically check whether the vehicle-end component meets the certificate confirmation condition. For example, the vehicle-end component may perform check each time the vehicle is started or at specific time every day.

S702: The vehicle-end component sends a certificate confirmation request message to a certificate service module.

Optionally, the certificate confirmation request message may include a device identifier and an application scenario identifier, or the device identifier, the application scenario identifier, and at least one of the following content: a device certificate, a message signature, and another additional parameter. The certificate confirmation request message may be the second request message in the method 300.

The device identifier identifies the vehicle-end component. The application scenario identifier is allocated based on a business, and identifies a use scenario of the certificate. A specific form of the scenario identifier may be a fixed character string, a readable name, a digital ID, or the like. The device certificate may be a device certificate that a vehicle end expects to confirm (namely, the second device certificate in the method 300 or the new device certificate in the method 600). The message signature may be a digital signature performed on the device identifier, the application scenario identifier, and the another additional parameter by using a private key of the device certificate. The another additional parameter may be used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), and the like.

S703: The certificate service module checks a status of the device certificate.

Specifically, after receiving the certificate confirmation request message, the certificate service module may check, based on the request message, the status of the device certificate in at least one of the following manners.
(1) The certificate service module uses a CA certificate to verify authority of the device certificate, check whether a validity period of the device certificate expires, and check a current state (an ineffective state, an effective state, a frozen state, a revoked state, or the like) of the device certificate.
(2) The certificate service module uses the device certificate to verify whether the signature in the certificate confirmation request message is valid.
(3) The certificate service module performs identity authorization, to be specific, checks whether the device identifier and the application scenario identifier are valid and whether certificate confirmation is allowed.
(4) Check on the certificate status succeeds when verification on the signature in the certificate confirmation request message succeeds, identity authorization succeeds, verification on the device certificate is completed, and the certificate status is the ineffective state or the effective state. Otherwise, check on the certificate status fails.

It should be understood that the foregoing process of checking the status of the device certificate is the process of verifying the second device certificate in the method 300. A check success result may be the verification result of the second device certificate in the method 300.

S704: The certificate service module refreshes the certificate status.

Specifically, this step is performed only when check on the certificate status succeeds and the certificate status is the ineffective state. When this step is performed, the status of the device certificate may be refreshed from the ineffective state to the effective state, and the certificate service module may switch, to the revoked state, the effective certificate corresponding to the device identifier and the application scenario identifier.

S705: The certificate service module sends a certificate confirmation response message to the vehicle-end component.

Optionally, the certificate confirmation response message includes a certificate confirmation result and at least one of the following content: a cloud certificate, a message signature, an application scenario identifier, the certificate confirmation result, and another additional parameter. The certificate confirmation response message may be the second response message in the method 300.

The certificate confirmation result may include success or a failure. To be specific, the certificate confirmation result is success when check on the device certificate succeeds. The certificate confirmation result is the failure when check on the device certificate fails. The cloud certificate is used to authenticate an identity of the certificate service module. The message signature may be a digital signature performed on all of the application scenario identifier, the certificate confirmation result, and the another additional parameter by using a private key of the cloud certificate. The application scenario identifier may be consistent with the application scenario identifier in the certificate confirmation request. The another additional parameter is used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), remark information (for example, a specific certificate state and the certificate being about to expire, to improve usability), and the like.

S706: The vehicle-end component verifies the response message.

Specifically, after receiving the certificate confirmation response message, the vehicle-end component may verify the cloud certificate and the message signature. Step S707 is performed after verification on the cloud certificate and the message signature succeeds.

S707: The vehicle-end component processes the local device certificate based on the certificate status.

Specifically, the vehicle-end component may process the locally stored device certificate based on the certificate confirmation result, which may specifically include the following three cases.
(1) When the certificate confirmation result is success, and the currently confirmed device certificate is already used for the business (the certificate is in the effective state), the vehicle-end component keeps the certificate unchanged, and continues to process the business by using the certificate.
(2) When the certificate confirmation result is success, and the currently confirmed certificate is not used for the business yet (the certificate is in the ineffective state), the vehicle-end component switches the certificate to a certificate used to process the business. The old certificate may be locally stored for a period of time or directly deleted. The business is subsequently processed by using the currently confirmed certificate.

In this case, after confirmation on the ineffective certificate is completed, the certificate service module may switch, to the revoked state, the status of the effective certificate corresponding to the device identifier and the application scenario identifier, and the vehicle-end component can subsequently process the business only by using the new certificate.

Optionally, in another implementation, the foregoing process may not be performed. To be specific, after the certificate is confirmed, the vehicle-end component is allowed to process the business by using the new certificate and the old certificate, and the vehicle-end component is further allowed to use any certificate for application. In other words, the old certificate and the new certificate may be used equally.

(3) When the certificate confirmation result is the failure, the vehicle end marks that the business cannot be performed. In this case, a user or a manufacturer may be prompted to restore the business and the certificate.

Optionally, before the vehicle-end component confirms the certificate, whether a local private key matches a public key of the device certificate may be checked. If the local private key matches the public key, the vehicle-end component can process the locally stored device certificate based on the certificate confirmation result. Otherwise, the vehicle end marks that the business cannot be performed. In this case, the vehicle-end component may prompt the user or the manufacturer to restore the business and the certificate.

In this embodiment of this application, in the certificate confirmation procedure, the vehicle-end component can send the device identifier and the application scenario identifier to the certificate service module. The certificate service module can complete confirmation on the device certificate based on the device identifier and the application scenario identifier. This can reduce complexity of the overall certificate confirmation procedure. In addition, the old device certificate is revoked after confirmation on the new device certificate is completed. This can reduce a risk of abuse of the old device certificate, and improve use security of the device certificate.

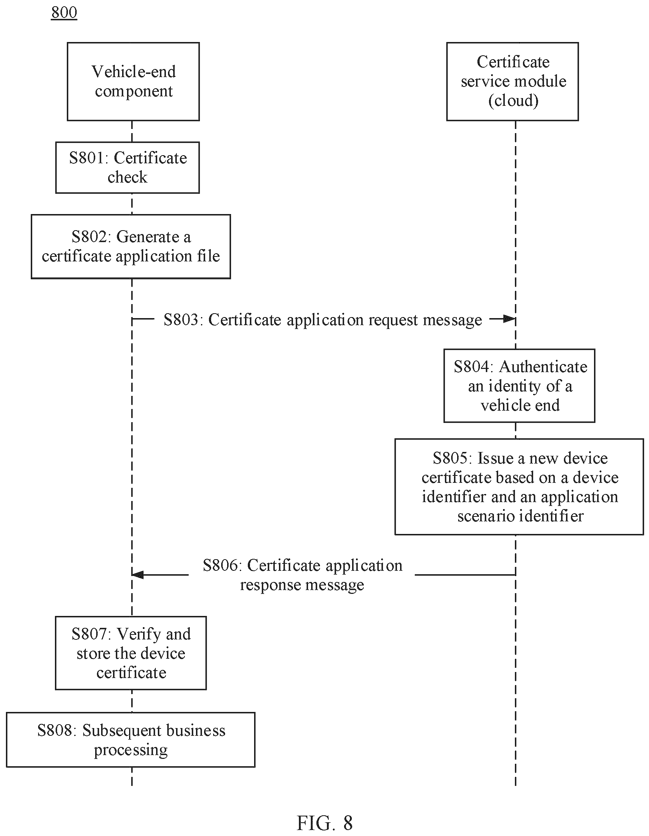

FIG. 8 is a schematic flowchart of another communication method according to an embodiment of this application. The method 800 may be detailed descriptions of steps S301 to S303 in the method 300. The method 800 may include the following steps.

S801: A vehicle-end component performs certificate check.

Specifically, the vehicle-end component may check a validity period of a local device certificate. When the device certificate is about to expire and/or meets another required condition, the vehicle-end component may initiate a certificate application process, and perform subsequent steps. The another required condition may include a vehicle running status, user confirmation, and/or the like. For example, when a vehicle is parked, the vehicle prompts a user that a certificate needs to be applied for. After the user performs confirmation on a vehicle-mounted display, the vehicle-end component may initiate the certificate application process.

Optionally, the vehicle-end component may periodically perform certificate check. For example, the vehicle-end component may perform certificate check each time the vehicle is started or at specific time every day.

S802: The vehicle-end component generates a certificate application file.

For example, the vehicle-end component may randomly generate a public-private key pair, generate the certificate application file based on a public key, and securely store a private key.

S803: The vehicle-end component sends a certificate application request message to a certificate service module.

Specifically, the vehicle-end component may send the certificate application request message to the certificate service module. The certificate application request message may include a device identifier and an application scenario identifier, or the device identifier, the application scenario identifier, and at least one of the following content: a device certificate, a message signature, the certificate application file, and another additional parameter. The certificate application request message may be the first request message in the method 300.

The device identifier may identify the vehicle-end component. The application scenario identifier is allocated based on a business, and identifies a use scenario of the certificate. A specific form of the scenario identifier may be a fixed character string, a readable name, a digital ID, or the like. The device certificate may be a device certificate used for the current business of a vehicle end, and the device certificate may be the first device certificate in the method 300. The message signature may be a digital signature performed on the device identifier, the application scenario identifier, the certificate application file, and the another additional parameter by using the private key of the device certificate. The another additional parameter is used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), and the like.

S804: The certificate service module authenticates an identity of the vehicle end.

Specifically, after receiving the certificate application request message, the certificate service module may authenticate, based on the certificate application request message, the identity of the vehicle end, which may include the following.
(1) The certificate service module uses a CA certificate to verify authority of the device certificate, check whether the validity period of the device certificate expires, and check whether the device certificate is in a valid state.
(2) The certificate service module uses the device certificate to verify whether the signature in the certificate application request message is valid.
(3) The certificate service module performs identity authorization, to be specific, checks whether the device identifier and the application scenario identifier are valid and whether certificate application is allowed.

S805: The certificate service module issues a new device certificate based on the device identifier and the application scenario identifier.

For example, the certificate service module may select corresponding information such as a certificate issuance address, an interface, and an identifier ID based on the device identifier and the application scenario identifier in the certificate application request message, and issue the new device certificate. The new device certificate may be the second device certificate in the method 300.

Optionally, the certificate service module may configure a correspondence between the application scenario identifier and certificate issuance service information in a form of a configuration file, a database, or the like.

S806: The certificate service module sends a certificate application response message to the vehicle-end component.

Optionally, the certificate application response message includes the new device certificate and at least one of the following content: a cloud certificate, a message signature, an application scenario identifier, and another additional parameter. The certificate application response message may be the first response message in the method 300.

The cloud certificate is used to authenticate an identity of the certificate service module. The message signature may be a digital signature performed on all of the application scenario identifier, the new device certificate, and the another additional parameter by using a private key of the cloud certificate. The application scenario identifier may be consistent with the application scenario identifier in the certificate application request. The another additional parameter is used to enhance usability and security of the certificate, and may include at least one of the following content: a business serial number (used to uniquely identify current interaction between the vehicle end and the certificate service module, to facilitate problem locating and tracing), a timestamp (used to ensure freshness of the message, to prevent a replay attack), a service identifier (identifying a request type of the current request, to facilitate traffic forwarding), and the like.

S807: The vehicle-end component verifies and stores the device certificate.

Specifically, after receiving the certificate application response message, the vehicle-end component may verify the cloud certificate and the message signature in the message. After verification on the cloud certificate and the message signature succeeds, the vehicle-end component verifies and securely stores the device certificate.

Optionally, a process of verifying the device certificate may include signature field verification, validity period verification, and the like.

S808: The vehicle-end component performs subsequent business processing.

Specifically, the vehicle-end component may process the business by using the old device certificate, and switch the device certificate after an appropriate condition is met, or may directly use the new device certificate in a subsequent business processing process. The appropriate condition may include completion of certificate confirmation, the vehicle being in a parked state, user confirmation, and the like.

In this embodiment of this application, in the device certificate application procedure, after application for the new device certificate is completed, the vehicle-end component can directly process the business by using the ineffective new device certificate. This improves efficiency of using the device certificate.

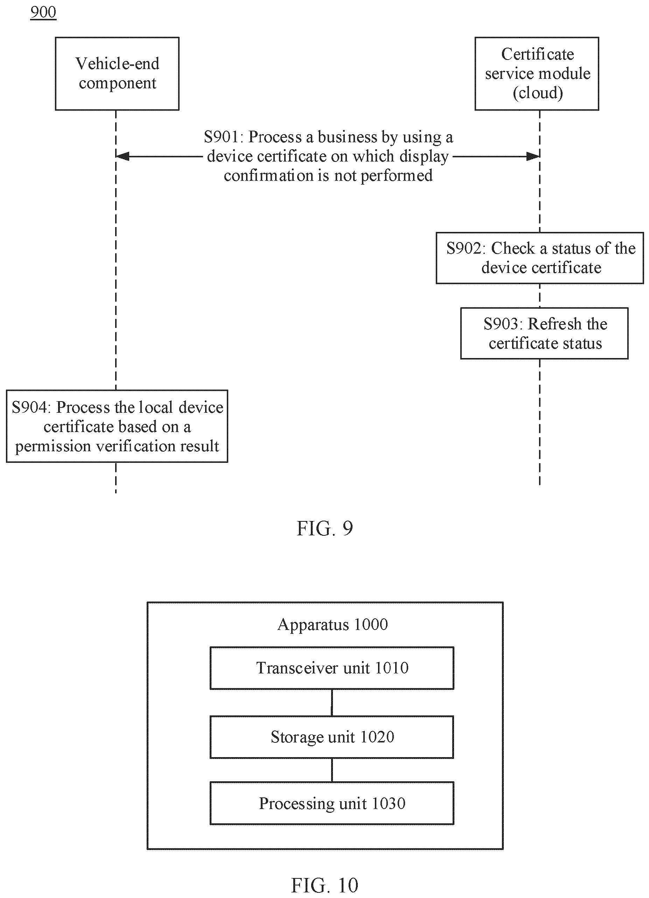

FIG. 9 is a schematic flowchart of another communication method according to an embodiment of this application. The method 900 is detailed descriptions of the business permission verification procedure in the method 300 and steps S501 to S505 in the method 500. The method 900 may be performed after the method 800. The method 800 may include the following steps.

S901: A vehicle-end component processes a business by using a device certificate on which display confirmation is not performed.

The device certificate on which display confirmation is not performed may be understood as a device certificate that is not confirmed through a device certificate confirmation procedure.

S902: A certificate service module checks a status of the device certificate.

For example, in this step, the certificate service module may obtain a device identifier of a vehicle end and an application scenario identifier corresponding to a business module, and check the certificate status based on the device identifier of the vehicle end and the application scenario identifier. The device identifier and the application scenario identifier may be obtained from the business module. To be specific, the vehicle-end component may include the device identifier and the application scenario identifier in a permission verification request message sent to the business module, and the business module initiates the certificate verification procedure. The permission verification request message may be the third request message in the method 300 or the method 500. The business module may be the second network device in the method 300 or the method 500.

The certificate status may be checked in at least one of the following manners.
(1) The certificate service module verifies the device certificate, to be specific, uses a CA certificate from a cloud service module to verify authority of the device certificate, check whether a validity period of the device certificate expires, and check a current state (for example, an ineffective state, an effective state, a frozen state, or a revoked state) of the device certificate.
(2) The certificate service module verifies a message signature, that is, uses the device certificate to verify whether the message signature is valid.
(3) The certificate service module performs identity authorization. To be specific, the certificate service module checks whether the device identifier and the application scenario identifier are valid and whether the certificate confirmation process is allowed.
(4) Certificate check succeeds when verification on the message signature and identity authorization succeeds, verification on the device certificate is completed, and the certificate status is the ineffective state or the effective state. Otherwise, the certificate check fails.

Optionally, when certificate check fails, the certificate service module may prompt the vehicle-end component that the certificate is invalid.

It should be understood that the foregoing process of checking the status of the device certificate is the process of verifying the second device certificate in the method 300.

S903: The certificate service module refreshes the certificate status.

Specifically, this step is performed only when check on the certificate status succeeds and the certificate status is the ineffective state. When this step is performed, the certificate status is refreshed from the ineffective state to an effective state, and the certificate service module may switch, to the revoked state, the effective certificate corresponding to the device identifier and the application scenario identifier.

After checking the certificate status, the certificate service module may return a check result of a new device certificate to the business module. The check result may be the certificate verification result in the method 300.

S904: The vehicle-end component processes the local device certificate based on a business processing result.

Specifically, the business module may determine, with reference to a result of checking the new device certificate by a certificate module, whether the vehicle-end component has permission to process a business, and send a permission verification result to the vehicle-end component. The vehicle-end component may process the locally stored device certificate based on the permission verification result, which may specifically include the following three cases.
(1) When the permission verification result is success, and the currently used device certificate is already used for the business (the certificate is in the effective state), the vehicle-end component keeps the certificate unchanged, and continues to process the business by using the certificate.
(2) When the permission verification result is success, and the currently used certificate is not used for the business yet (the certificate is in the ineffective state), the vehicle-end component switches the certificate to a certificate used to process the business. The old certificate may be locally stored for a period of time or directly deleted. The business is subsequently processed by using the currently confirmed certificate.
(3) When the permission verification result is a failure, and the certificate returned by the certificate service module is invalid, the vehicle end may prompt a user or a manufacturer to restore the business and the certificate.

In this embodiment of this application, the vehicle-end component can directly process the business by using the new ineffective device certificate, and the vehicle-end component can determine a use policy of the new certificate and the old certificate based on the verification result of the business permission. In this manner, the vehicle-end component can omit a process of information exchange with the certificate service module. This improves business processing efficiency.

An embodiment of this application further provides an apparatus configured to implement any one of the foregoing methods. The apparatus includes units configured to implement steps performed by the transportation means, the first network device, or the second network device in any one of the foregoing methods.

FIG. 10 is a diagram of a communication apparatus 1000 according to an embodiment of this application. The apparatus 1000 may include a transceiver unit 1010, a storage unit 1020, and a processing unit 1030. The transceiver unit 1010 is configured to receive or send instructions and/or data. The transceiver unit 1010 may also be referred to as a communication interface or a communication unit. The storage unit 1020 is configured to: implement a corresponding storage function, and store corresponding instructions and/or data. The processing unit 1030 is configured to perform data processing. The processing unit 1030 may read the instructions and/or the data in the storage unit, for the apparatus 1000 to implement the foregoing communication method.

In a design, the apparatus 1000 is configured to perform the actions performed by the transportation means in the foregoing method embodiments.

In a design, the apparatus 1000 may include the transceiver unit 1010. The transceiver unit 1010 is configured to: send a first request message to a first network device, where the first request message is used to request the first network device to issue a device certificate, the first request message includes a device identifier and an application scenario identifier, the device identifier identifies the transportation means and/or a component included in the transportation means, the application scenario identifier identifies a use scenario of a first device certificate, and the first device certificate is a certificate used when the transportation means performs a first business; and receive a first response message sent by the first network device, where the first response message includes a second device certificate, the second device certificate is associated with the device identifier and the application scenario identifier, and the second device certificate is used to process the first business.

In a possible implementation, the apparatus further includes the processing unit 1030. The processing unit 1030 is configured to process the first business by using the first device certificate or the second device certificate.

In a possible implementation, the transceiver unit 1010 is further configured to: send a second request message to the first network device, where the second request message is used to request the first network device to verify the second device certificate; and receive a second response message sent by the first network device, where the second response message includes a verification result of the second device certificate associated with the device identifier and the application scenario identifier.

In a possible implementation, the second request message includes the second device certificate, the device identifier, and the application scenario identifier.

In a possible implementation, when the verification result of the second device certificate is that verification succeeds, and the transportation means processes the first business by using the first device certificate, the processing unit 1030 is specifically configured to: switch the first device certificate to the second device certificate, and process the first business.

In a possible implementation, when the verification result of the second device certificate is that verification succeeds, and the transportation means processes the first business by using the second device certificate, the processing unit 1030 is specifically configured to continue to process the first business by using the second device certificate.

In a possible implementation, when the verification result of the second device certificate is that verification fails, the processing unit 1030 is specifically configured to process the first business by using the first device certificate.

In a possible implementation, when the verification result of the second device certificate is that verification fails, the processing unit 1030 is further configured to prompt a user that the second device certificate is unavailable.

In a possible implementation, the processing unit 1030 is further configured to determine whether a locally stored private key matches a public key of the second device certificate. The transceiver unit 1010 is further configured to send a second request message to the first network device when the locally stored private key matches the public key of the second device certificate.

In a possible implementation, the transceiver unit 1010 is further configured to: send a third request message to a second network device, where the third request message is used to request the second network device to verify whether the transportation means has permission to perform the first business, and the third request message includes at least one of the following content: the second device certificate, the device identifier, and the application scenario identifier; and receive a third response message sent by the second network device, where the third response message indicates a permission verification result of the transportation means.

In a possible implementation, when the permission verification result is that the transportation means has the permission to perform the first business, and the transportation means processes the first business by using the first device certificate, the processing unit 1030 is specifically configured to: switch the first device certificate to the second device certificate, and process the first business.

In a possible implementation, when the permission verification result is that the transportation means has the permission to perform the first business, and the transportation means processes the first business by using the second device certificate, the processing unit 1030 is specifically configured to continue to process the first business by using the second device certificate.

In a possible implementation, when the permission verification result is that the transportation means does not have the permission to perform the first business, the processing unit 1030 is specifically configured to process the first business by using the first device certificate.

In a design, the apparatus 1000 may include the transceiver unit 1010. The transceiver unit 1010 is configured to: send a second request message to a first network device, where the second request message is used to request the first network device to verify a second device certificate; and receive a second response message sent by the first network device, where the second response message includes a verification result of the second device certificate associated with a device identifier and an application scenario identifier, where the device identifier identifies the transportation means and/or a component included in the transportation means, the application scenario identifier identifies a use scenario of a first device certificate, and the first device certificate is a certificate used when the transportation means performs a first business.

In a possible implementation, the second request message includes the second device certificate, the device identifier, and the application scenario identifier.

In a possible implementation, the apparatus further includes the processing unit 1030. The processing unit 1030 is configured to process the first business by using the first device certificate or the second device certificate.

In a possible implementation, when the verification result of the second device certificate is that verification succeeds, and the transportation means processes the first business by using the first device certificate, the processing unit 1030 is specifically configured to: switch the first device certificate to the second device certificate, and process the first business.

In a possible implementation, when the verification result of the second device certificate is that verification succeeds, and the transportation means processes the first business by using the second device certificate, the processing unit 1030 is specifically configured to continue to process the first business by using the second device certificate.

In a possible implementation, when the verification result of the second device certificate is that verification fails, the processing unit 1030 is specifically configured to process the first business by using the first device certificate.

In a possible implementation, the processing unit 1030 is further configured to prompt a user that the second device certificate is unavailable.

In a possible implementation, the processing unit 1030 is further configured to determine whether a locally stored private key matches a public key of the second device certificate. The transceiver unit 1010 is specifically configured to send the second request message to the first network device when the locally stored private key matches the public key of the second device certificate.

In a design, the apparatus 1000 may include the transceiver unit 1010. The transceiver unit 1010 is configured to: send a third request message to a second network device, where the third request message is used to request a second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; and receive a third response message sent by the second network device, where the third response message indicates a permission verification result of the transportation means.

In a possible implementation, the apparatus 1000 further includes the processing unit 1030. The processing unit 1030 is configured to process the first business by using the first device certificate or the second device certificate.

In a possible implementation, when the permission verification result is that the transportation means has the permission to perform the first business, and the transportation means processes the first business by using the first device certificate, the processing unit 1030 is specifically configured to: switch the first device certificate to the second device certificate, and process the first business.

In a possible implementation, when the permission verification result is that the transportation means has the permission to perform the first business, and the transportation means processes the first business by using the second device certificate, the processing unit 1030 is specifically configured to continue to process the first business by using the second device certificate.

In a possible implementation, when the permission verification result is that the transportation means does not have the permission to perform the first business, the processing unit 1030 is specifically configured to process the first business by using the first device certificate.

In a design, the apparatus 1000 is configured to perform the actions performed by the first network device in the foregoing method embodiments.

In a design, the apparatus 1000 may include the transceiver unit 1010 and the processing unit 1030. The transceiver unit 1010 is configured to receive a first request message sent by a transportation means, where the first request message is used to request the first network device to issue a device certificate, the first request message includes a device identifier and an application scenario identifier, the device identifier identifies the transportation means and/or a component included in the transportation means, the application scenario identifier identifies a use scenario of a first device certificate, and the first device certificate is a certificate used when the transportation means performs a first business. The processing unit 1030 is configured to determine a second device certificate based on the device identifier and the application scenario identifier. The transceiver unit 1010 is further configured to send a first response message to the transportation means, where the first response message includes the second device certificate, and the second device certificate is used to process the first business.

In a possible implementation, the transceiver unit 1010 is further configured to receive a second request message sent by a first device, where the second request message is used to request the first network device to verify the second device certificate, and the first device includes the transportation means or a second network device. The processing unit 1030 is further configured to determine a verification result of the second device certificate based on the device identifier and the application scenario identifier. The transceiver unit 1010 is further configured to send a second response message to the first device, where the second response message indicates the verification result of the second device certificate.

In a possible implementation, the second request message includes the second device certificate, the device identifier, and the application scenario identifier.

In a possible implementation, the processing unit 1030 is specifically configured to: verify validity of the device identifier and the application scenario identifier; and when the device identifier and the application scenario identifier are valid, determine that the verification result of the second device certificate is that verification succeeds.

In a possible implementation, the processing unit 1030 is specifically configured to verify whether the device identifier is consistent with a device identifier preset in the first network device and whether the application scenario identifier is consistent with an application scenario identifier preset in the first network device.

In a possible implementation, the processing unit 1030 is further configured to keep a status of the first device certificate in an effective state.

In a possible implementation, the second request message further includes a message signature. The processing unit 1030 is further configured to verify validity of the message signature by using the second device certificate.

In a possible implementation, the application scenario identifier includes at least one of the following content: a character string, a readable name, and a digital ID.

In a design, the apparatus 1000 may include the transceiver unit 1010 and the processing unit 1030. The transceiver unit 1010 is configured to receive a second request message sent by a first device, where the second request message is used to request the first network device to verify a second device certificate, and the first device includes a transportation means or a second network device. The processing unit 1030 is configured to determine a verification result of the second device certificate based on a device identifier and an application scenario identifier. The transceiver unit 1010 is further configured to send a second response message to the first device, where the second response message indicates the verification result of the second device certificate.

In a possible implementation, the second request message includes the second device certificate, the device identifier, and the application scenario identifier.

In a possible implementation, the processing unit 1030 is specifically configured to: verify validity of the device identifier and the application scenario identifier; and when the device identifier and the application scenario identifier are valid, determine that the verification result of the second device certificate is that verification succeeds.

In a possible implementation, the processing unit 1030 is specifically configured to verify whether the device identifier is consistent with a device identifier preset in the first network device and whether the application scenario identifier is consistent with an application scenario identifier preset in the first network device.

In a possible implementation, the processing unit 1030 is further configured to keep a status of the first device certificate in an effective state.

In a possible implementation, the second request message further includes a message signature. The processing unit 1030 is further configured to verify validity of the message signature by using the second device certificate.

In a possible implementation, the application scenario identifier includes at least one of the following content: a character string, a readable name, and a digital ID.

In a design, the apparatus 1000 is configured to perform the actions performed by the second network device in the foregoing method embodiments.

In a design, the apparatus 1000 includes the transceiver unit 1010 and the processing unit 1030. The transceiver unit 1010 is configured to: receive a third request message sent by a transportation means, where the third request message is used to request the second network device to verify whether the transportation means has permission to perform a first business, the third request message includes at least one of the following content: a second device certificate, a device identifier, and an application scenario identifier, the second device certificate is used to process the first business, the device identifier identifies the transportation means and/or a component included in the transportation means, the application scenario identifier identifies a use scenario of a first device certificate, and the first device certificate is a certificate used when the transportation means performs the first business; send a second request message to a first network device, where the second request message is used to request the first network device to verify the second device certificate, and the second request message includes the second device certificate, the device identifier, and the application scenario identifier; and receive a second response message sent by the first network device, where the second response message includes a verification result of the second device certificate associated with the device identifier and the application scenario identifier. The processing unit 1030 is configured to send a third response message to the transportation means based on the verification result of the second device certificate, where the third response message indicates a permission verification result of the transportation means.

In a possible implementation, when the verification result of the second certificate is success, the third response message indicates that the transportation means has the permission to perform the first business.

Optionally, if the apparatus 1000 is located in the transportation means 100, the processing unit 1030 may be the processor 131 shown in FIG. 1.

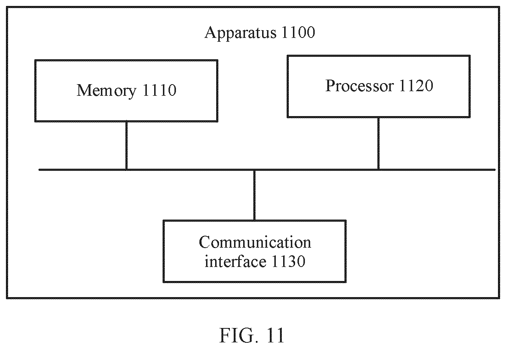

FIG. 11 is a diagram of another communication apparatus 1100 according to an embodiment of this application.

The communication apparatus 1100 includes a memory 1110, a processor 1120, and a communication interface 1130. The memory 1110, the processor 1120, and the communication interface 1130 are connected to each other through an internal connection path. The memory 1110 is configured to store instructions. The processor 1120 is configured to execute the instructions stored in the memory 1110, for controlling the communication interface 1130 to obtain information, or for the communication apparatus to perform the communication method in the foregoing embodiments. Optionally, the memory 1110 may be coupled to the processor 1120 through an interface, or may be integrated with the processor 1120.

It should be noted that the communication interface 1130 is a transceiver apparatus, for example, but not limited to, a transceiver. The communication interface 1130 may further include an input/output interface (input/output interface).

The processor 1120 stores one or more computer programs. The one or more computer programs include instructions. When the instructions are run by the processor 1120, the communication apparatus 1100 performs the communication methods in the foregoing embodiments.

In an implementation process, the steps in the foregoing methods may be implemented through a hardware integrated logical circuit in the processor 1120 or by using instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1110. The processor 1120 reads information in the memory 1110, and completes the steps in the foregoing methods in combination with hardware of the processor. To avoid repetition, details are not described herein again.

Optionally, the communication interface 1130 in FIG. 11 may implement the transceiver unit 1010 in FIG. 10. The memory 1110 in FIG. 11 may implement the storage unit 1020 in FIG. 10. The processor 1120 in FIG. 11 may implement the processing unit 1030 in FIG. 10.

Optionally, the apparatus 1000 or the apparatus 1100 may be a computing platform. The computing platform may be a vehicle-mounted computing platform or a cloud computing platform.

Optionally, the apparatus 1000 or the apparatus 1100 may be located in the transportation means 100 in FIG. 1.

Optionally, the apparatus 1000 or the apparatus 1100 may be the computing platform 130 in the transportation means in FIG. 1.

An embodiment of this application further provides a computer-readable medium. The computer-readable medium stores program code. When the computer program code is run on a computer, the computer performs any one of the methods in FIG. 3 to FIG. 9.

An embodiment of this application further provides a chip, including a circuit. The circuit is configured to perform any one of the methods in FIG. 3 to FIG. 9.

An embodiment of this application further provides a computer program product. The computer product includes a computer program. When the computer program is run, a computer performs any one of the methods in FIG. 3 to FIG. 9.

A person of ordinary skill in the art may be aware that units and algorithm steps in the examples described with reference to embodiments disclosed in this specification can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings, direct couplings, or communicative connections may be implemented through some interfaces. The indirect couplings or communicative connections between the apparatuses or units may be implemented in electronic, mechanical, or other forms.

The units described as separate parts may or may not be physically separate, and parts displayed as units may or may not be physical units, may be located in one place, or may be distributed on a plurality of network units. Some or all of the units may be selected based on actual requirements, to achieve the objectives of the solutions in embodiments.

In addition, functional units in embodiments of this application may be integrated into one processing unit, or each of the units may exist alone physically, or two or more units may be integrated into one unit.

The functions may be stored in a computer-readable storage medium when the functions are implemented in a form of a software functional unit and sold or used as an independent product. Based on such an understanding, the technical solutions of this application essentially, or a part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending a first request message to a first network device, wherein the first request message is used to request the first network device to issue a device certificate, the first request message comprises a device identifier and an application scenario identifier, the device identifier identifies a transportation means and/or a component comprised in the transportation means, the application scenario identifier identifies a use scenario of a first device certificate, and the first device certificate is a certificate used when the transportation means performs a first business; and
receiving a first response message sent by the first network device, wherein the first response message comprises the second device certificate, the second device certificate is associated with the device identifier and the application scenario identifier, and the second device certificate is used to process the first business.

2. The method according to claim 1, wherein the method further comprises:
processing the first business by using the first device certificate or the second device certificate.

3. The method according to claim 2, wherein the method further comprises:
sending a second request message to the first network device, wherein the second request message is used to request the first network device to verify the second device certificate; and
receiving a second response message sent by the first network device, wherein the second response message comprises a verification result of the second device certificate associated with the device identifier and the application scenario identifier.

4. The method according to claim 3, wherein the second request message comprises the second device certificate, the device identifier, and the application scenario identifier.

5. The method according to claim 3 or 4, wherein when the verification result of the second device certificate is that verification succeeds, and the transportation means processes the first business by using the first device certificate, the processing the first business by using the first device certificate or the second device certificate comprises:
switching the first device certificate to the second device certificate, and processing the first business.

6. The method according to claim 3 or 4, wherein when the verification result of the second device certificate is that verification succeeds, and the transportation means processes the first business by using the second device certificate, the processing the first business by using the first device certificate or the second device certificate comprises:
continuing to process the first business by using the second device certificate.

7. The method according to claim 3 or 4, wherein when the verification result of the second device certificate is that verification fails, the processing the first business by using the first device certificate or the second device certificate comprises:
processing the first business by using the first device certificate.

8. The method according to claim 7, wherein the method further comprises:
prompting a user that the second device certificate is unavailable.

9. The method according to any one of claims 3 to 8, wherein before the sending a second request message to the first network device, the method further comprises:
determining whether a locally stored private key matches a public key of the second device certificate; and
the sending a second request message to the first network device comprises:
sending the second request message to the first network device when the locally stored private key matches the public key of the second device certificate.

10. The method according to claim 2, wherein the method further comprises:
sending a third request message to a second network device, wherein the third request message is used to request the second network device to verify whether the transportation means has permission to perform the first business, and the third request message comprises at least one of the following content: the second device certificate, the device identifier, and the application scenario identifier; and
receiving a third response message sent by the second network device, wherein the third response message indicates a permission verification result of the transportation means.

11. The method according to claim 10, wherein when the permission verification result is that the transportation means has the permission to perform the first business, and the transportation means processes the first business by using the first device certificate, the processing the first business by using the first device certificate or the second device certificate comprises:
switching the first device certificate to the second device certificate, and processing the first business.

12. The method according to claim 10, wherein when the permission verification result is that the transportation means has the permission to perform the first business, and the transportation means processes the first business by using the second device certificate, the processing the first business by using the first device certificate or the second device certificate comprises:
continuing to process the first business by using the second device certificate.

13. The method according to claim 10, wherein when the permission verification result is that the transportation means does not have the permission to perform the first business, the processing the first business by using the first device certificate or the second device certificate comprises:
processing the first business by using the first device certificate.

14. A communication method, wherein the method comprises:
receiving a first request message sent by a transportation means, wherein the first request message is used to request a first network device to issue a device certificate, the first request message comprises a device identifier and an application scenario identifier, the device identifier identifies the transportation means and/or a component comprised in the transportation means, the application scenario identifier identifies a use scenario of a first device certificate, and the first device certificate is a certificate used when the transportation means performs a first business;
determining a second device certificate based on the device identifier and the application scenario identifier; and
sending a first response message to the transportation means, wherein the first response message comprises the second device certificate, and the second device certificate is used to process the first business.

15. The method according to claim 14, wherein the method further comprises:
receiving a second request message sent by a first device, wherein the second request message is used to request the first network device to verify the second device certificate, and the first device comprises the transportation means or a second network device;
determining a verification result of the second device certificate based on the device identifier and the application scenario identifier; and
sending a second response message to the first device, wherein the second response message indicates the verification result of the second device certificate.

16. The method according to claim 15, wherein the second request message comprises the second device certificate, the device identifier, and the application scenario identifier.

17. The method according to claim 15 or 16, wherein the determining a verification result of the second device certificate based on the device identifier and the application scenario identifier comprises:
verifying validity of the device identifier and the application scenario identifier; and
when the device identifier and the application scenario identifier are valid, determining that the verification result of the second device certificate is that verification succeeds.

18. The method according to claim 17, wherein the verifying validity of the device identifier and the application scenario identifier comprises:
verifying whether the device identifier is consistent with a device identifier preset in the first network device and whether the application scenario identifier is consistent with an application scenario identifier preset in the first network device.

19. The method according to claim 17 or 18, wherein the method further comprises:
keeping a status of the first device certificate in an effective state.

20. The method according to any one of claims 14 to 19, wherein the second request message further comprises a message signature, and before the determining a verification result of the second device certificate based on the device identifier and the application scenario identifier, the method further comprises:
verifying validity of the message signature by using the second device certificate.

21. The method according to any one of claims 14 to 20, wherein the application scenario identifier comprises at least one of the following content: a character string, a readable name, and a digital ID.

22. A communication method, wherein the method comprises:
receiving a third request message sent by a transportation means, wherein the third request message is used to request the second network device to verify whether the transportation means has permission to perform a first business, the third request message comprises at least one of the following content: a second device certificate, a device identifier, and an application scenario identifier, the second device certificate is used to process the first business, the device identifier identifies the transportation means and/or a component comprised in the transportation means, the application scenario identifier identifies a use scenario of a first device certificate, and the first device certificate is a certificate used when the transportation means performs the first business;
sending a second request message to the first network device, wherein the second request message is used to request the first network device to verify the second device certificate, and the second request message comprises the second device certificate, the device identifier, and the application scenario identifier;
receiving a second response message sent by the first network device, wherein the second response message comprises a verification result of the second device certificate associated with the device identifier and the application scenario identifier; and
sending a third response message to the transportation means based on the verification result of the second device certificate, wherein the third response message indicates a permission verification result of the transportation means.

23. The method according to claim 22, wherein when the verification result of the second device certificate is success, the third response message indicates that the transportation means has the permission to perform the first business.

24. A communication apparatus, wherein the apparatus comprises a transceiver unit, wherein
the transceiver unit is configured to:
send a first request message to a first network device, wherein the first request message is used to request the first network device to issue a device certificate, the first request message comprises a device identifier and an application scenario identifier, the device identifier identifies a transportation means and/or a component comprised in the transportation means, the application scenario identifier identifies a use scenario of a first device certificate, and the first device certificate is a certificate used when the transportation means performs a first business; and
receive a first response message sent by the first network device, wherein the first response message comprises the second device certificate, the second device certificate is associated with the device identifier and the application scenario identifier, and the second device certificate is used to process the first business.

25. A communication apparatus, wherein the apparatus comprises a transceiver unit and a processing unit, wherein
the transceiver unit is configured to receive a first request message sent by a transportation means, wherein the first request message is used to request a first network device to issue a device certificate, the first request message comprises a device identifier and an application scenario identifier, the device identifier identifies the transportation means and/or a component comprised in the transportation means, the application scenario identifier identifies a use scenario of a first device certificate, and the first device certificate is a certificate used when the transportation means performs a first business;
the processing unit is configured to determine a second device certificate based on the device identifier and the application scenario identifier; and
the transceiver unit is further configured to send a first response message to the transportation means, wherein the first response message comprises the second device certificate, and the second device certificate is used to process the first business.

26. A communication apparatus, wherein the apparatus comprises a transceiver unit and a processing unit, wherein
the transceiver unit is configured to:
receive a third request message sent by a transportation means, wherein the third request message is used to request the second network device to verify whether the transportation means has permission to perform a first business, the third request message comprises at least one of the following content: a second device certificate, a device identifier, and an application scenario identifier, the second device certificate is used to process the first business, the device identifier identifies the transportation means and/or a component comprised in the transportation means, the application scenario identifier identifies a use scenario of a first device certificate, and the first device certificate is a certificate used when the transportation means performs the first business;
send a second request message to the first network device, wherein the second request message is used to request the first network device to verify the second device certificate, and the second request message comprises the second device certificate, the device identifier, and the application scenario identifier; and
receive a second response message sent by the first network device, wherein the second response message comprises a verification result of the second device certificate associated with the device identifier and the application scenario identifier; and
the processing unit is configured to send a third response message to the transportation means based on the verification result of the second device certificate, wherein the third response message indicates a permission verification result of the transportation means.

27. A communication apparatus, comprising a processor and a memory, wherein the processor is coupled to the memory, and is configured to: read and execute instructions in the memory, to perform the method according to any one of claims 1 to 13.

28. A communication apparatus, comprising a processor and a memory, wherein the processor is coupled to the memory, and is configured to: read and execute instructions in the memory, to perform the method according to any one of claims 14 to 21.

29. A communication apparatus, comprising a processor and a memory, wherein the processor is coupled to the memory, and is configured to: read and execute instructions in the memory, to perform the method according to claim 22 or 23.

30. A transportation means, comprising a processor and a memory, wherein the processor is coupled to the memory, and is configured to: read and execute instructions in the memory, to perform the method according to any one of claims 1 to 13.

31. The method according to claim 30, wherein the transportation means comprises a vehicle.

32. A server, comprising a processor and a memory, wherein the processor is coupled to the memory, and is configured to: read and execute instructions in the memory, to perform the method according to any one of claims 14 to 21.

33. A server, comprising a processor and a memory, wherein the processor is coupled to the memory, and is configured to: read and execute instructions in the memory, to perform the method according to claim 22 or 23.

34. A computer-readable medium, wherein the computer-readable medium stores program code, and when the computer program code is run on a computer, the computer performs the method according to any one of claims 1 to 23.

35. A computer program product, wherein the computer product comprises a computer program, and when the computer program is run, a computer performs the method according to any one of claims 1 to 23.
